# EUROPÄISCHE PATENTSCHRIFT

(11) **EP 2 753 460 B1**
(45) Veröffentlichungstag und Bekanntmachung des Hinweises auf die Patenterteilung: **07.12.2016**
(21) Anmeldenummer: 12783489.3
(22) Anmeldetag: 06.09.2012
(51) Int. Cl.: G05B 19/427, B25J 13/02, B25J 13/00, B25J 9/16

(54) **VERFAHREN, STEUERUNGSSYSTEM UND BEWEGUNGSVORGABEMITTEL ZUM PROGRAMMIEREN ODER VORGEBEN VON BEWEGUNGEN ODER ABLÄUFEN EINES INDUSTRIEROBOTERS**
METHOD, CONTROL SYSTEM AND MOVEMENT PRESETTING MEANS FOR PROGRAMMING OR PRESETTING MOVEMENTS OR PROCESSES BY AN INDUSTRIAL ROBOT
PROCÉDÉ, SYSTÈME DE COMMANDE ET MOYEN DE PRÉDÉFINITION DE MOUVEMENTS POUR PROGRAMMER OU SPÉCIFIER DES MOUVEMENTS OU DES SÉQUENCES D'UN ROBOT INDUSTRIEL

(30) Priorität: 06.09.2011 AT 49011 U
(43) Veröffentlichungstag der Anmeldung: 16.07.2014
(73) Patentinhaber: KEBA AG, A-4041 Linz (AT)
(72) Erfinder: MITTERMAYER, Christoph, A-3400 Weidling/Klosterneuburg (AT)
(74) Vertreter: Burger, Hannes
(86) Internationale Anmeldenummer: PCT/AT2012/050132
(87) Internationale Veröffentlichungsnummer: WO 2013/033747

(56) Entgegenhaltungen:
- EP-A2- 2 012 208
- WO-A1-96/09918

## Beschreibung

Die Erfindung betrifft ein Verfahren zum Programmieren oder Vorgeben von Bewegungen oder Abläufen eines Industrieroboters oder einer sonstigen mehrachsig steuerbaren Handhabungsvorrichtung oder Werkzeugmaschine, ein zur Durchführung dieses Verfahrens ausgebildetes Steuerungssystem, sowie ein Bewegungsvorgabemittel zur Durchführung des angegebenen Verfahrens, wie dies in den Ansprüchen 1, 18 und 20 angegeben ist.

Aus dem Stand der Technik sind Führungs- bzw. Leitsysteme für Industrieroboter oder vergleichbare, mehrachsig steuerbare Handhabungsvorrichtungen bekannt, deren Prinzip darauf beruht, eine Bewegung, die eine Bedienperson mit einem händisch zu führenden Bewegungsvorgabemittel ausführt, direkt auf den Industrieroboter zu übertragen. Die freie Bewegung des händisch zu führenden Bewegungsvorgabemittels wird dabei mit integrierten und/oder externen Sensoren erfasst, daraus die Bewegung des Bewegungsvorgabemittels und in weiterer Folge die korrespondierende Bewegung des Industrieroboters errechnet. Die Bewegung des Industrieroboters kann dabei auf eine Translation oder Rotation von Handlingachsen bzw. Armen des Industrieroboters eingeschränkt sein. Ebenso ist es möglich, die Freiheitsgrade des Industrieroboters bedarfsweise einzuschränken bzw. zu selektieren oder ausschließlich translatorische oder rotatorische Bewegungen bzw. eine Kombination davon zuzulassen. Ebenso ist es bekannt, konstante oder veränderliche, translatorische oder rotatorische Skalierungsfaktoren für die Transformation der Bewegung des händisch zu führenden Bewegungsvorgabemittels gegenüber den Bewegungen des Industrieroboters vorzusehen. Dadurch können beispielsweise größere Bewegungsräume des Industrieroboters durch einen angemessenen Bewegungsraum des Bewegungsvorgabemittels bequem abgedeckt werden. Andererseits können durch diese Skalierungsfaktoren in Verbindung mit der Transformation von Bewegungen auch entsprechend weitreichende und somit für die Bedienperson gut wahrnehm- und ausführbare Bewegungen mit dem händisch zu führenden Bewegungsvorgabemittel vorgenommen werden, sodass auch relativ feine Einstellungen bzw. Bewegungen des Industrieroboters exakt bzw. feinfühlig ausgeführt werden können. Es können also Skalierungen zwischen der Bewegungsvorgabe durch die Bedienperson und der Bewegungsumsetzung durch den Industrieroboter in vergrößernder und verkleinernder Richtung zweckmäßig sein.

Aus dem Stand der Technik ist es weiters bekannt, dass es zweckmäßig ist, wenn die Bewegung des Industrieroboters bzw. dessen Greifers oder Werkzeugs unmittelbar, das heißt direkt und unverzögert der Bewegung des Bewegungsvorgabemittels folgt, ohne dass sich die Bedienperson über die verschiedenen Koordinatensysteme und über die Transformation der Bedienhandlungen auf die gewünschte Bewegung des Industrieroboters Gedanken machen muss. Eine solche direkt gekoppelte Übertragung der Bewegung des Bewegungsvorgabemittels auf den Industrieroboter ermöglicht eine sehr intuitive Führung des Industrieroboters und ist diese Maßnahme daher vor allem für wenig geübte Benutzer, die nur relativ selten einen Industrieroboter bedienen, von besonderem Vorteil. Eine solche Bedienung des Industrieroboters ähnelt dabei in gewissem Ausmaß einer Cursorsteuerung mit einer Computermaus, jedoch ist die Bewegungssteuerung für einen Industrieroboter um einige zusätzliche Freiheitsgrade zu erweitern. Eine wichtige Rolle bei diesen Bedienhandlungen bzw. Bewegungsvorgaben stellt dabei das visuelle Feedback über die Bewegung des Industrieroboters für die Bedienperson dar.

Die DE 43 03 264 A1 offenbart Grundzüge eines Bedienverfahrens für Industrieroboter, bei welchem die Bewegung und die Orientierung eines tragbaren Bediengeräts erfasst werden und diese Bewegungs- und Orientierungsdaten direkt in eine korrespondierende Bewegung des Industrieroboters umgesetzt wird. Weiters wird eine Bewegungseinschränkung in Bezug auf eine bestimmte Vorauswahl von Freiheitsgraden des Industrieroboters und eine Skalierung der Bewegungen beschrieben.

Auch aus der DE 10 2004 020 099 A1 bzw. der EP 1 588 806 B1 ist ein Verfahren zum Programmieren oder Vorgeben von Bewegungen oder Abläufen eines Industrieroboters bekannt. Entsprechend diesem bekannten System ist ein handgeführtes Beeinflussungsmittel vorgesehen, mit welchem ein mehrachsiger Industrieroboter steuerungstechnisch beeinflusst werden kann. Hierzu wird die Position und Lage bzw. Orientierung des Beeinflussungsmittels im Raum gemessen und zum Beeinflussen des Industrieroboters verwendet. Erfindungsgemäß sollen dabei abwechselnd Bewegungen des händisch geführten Beeinflussungsmittels und zugeordnete Bewegungen des Industrieroboters durchgeführt werden. Durch das vorgeschlagene Zerlegen der Bewegungen des Industrieroboters in kurze, jeweils durch das Beeinflussungsmittel beeinflusste Teilbewegungen, wird trotz physikalisch bedingter Ungenauigkeiten der verwendeten Sensorik, insbesondere einer Inertial-Sensorik, eine relativ genaue, sichere und intuitive Beeinflussung, insbesondere Bewegungsprogrammierung von Industrierobotern erreicht. In dieser Schrift wird rudimentär auch auf die sicherheitstechnische Problematik der Ge-schwindigkeit des Industrieroboters und/oder auf die Problematik der räumlichen oder zeitlichen Skalierung der Bewegung des Industrieroboters eingegangen. Grundsätzlich geht diese Druckschrift aber von einem Bedienprinzip aus, bei welchem die Bedienperson eine kurze Teilbewegung mit einem handgeführten Beeinflussungsmittel vorzeigt und erst im Anschluss daran diese Teilbewegung vom Industrieroboter nachgemacht wird. Diese Abfolge wiederholt sich mehrfach, bis die komplette Bahn bzw. Sollstrecke abgefahren bzw. programmiert ist. Durch das abwechselnde Vorzeigen und Nachfahren von Bewegungen werden jedoch die Vorteile einer unmittelbar bzw. direkt gekoppelten Führung des Industrieroboters überhaupt nicht genutzt.

Die EP 2 012 208 A2 offenbart ein Programmierhandgerät zum Programmieren eines Industrieroboters, welches Programmierhandgerät einen Griff und eine Kamera mit einer bildgebenden Optik aufweist. Die Kamera ist derart zumindest indirekt mit dem Griff gelenkig verbunden, dass sich die bildgebende Optik der Kamera unabhängig von der Stellung des Griffs im Raum in Richtung der Schwerkraft selbsttätig ausrichtet. Die Kamera ist außerdem zumindest indirekt derart mit dem Griff gelenkig verbunden, dass bei einer Drehung des Griffs um eine in Richtung der Schwerkraft verlaufende erste Achse, sich die Optik der Kamera entsprechend der Drehung des Griffs um die erste Achse dreht. Aufgrund von Ausrichtungen von Abbildungen von Markern wird dabei mittels einer Bildverarbeitung des Bildes der Kamera bzw. eines dem Bild zugeordneten Bilddatensatzes ein Orientierungswinkel bezüglich einer vorgegebenen Pfeilrichtung berechnet.

Die gegenständliche Erfindung bezieht sich unter anderem auf ein Bewegungsvorgabemittel, insbesondere in der Art eines von der Anmelderin auch als "Teachvector" bezeichneten Eingabe- bzw. Programmiergerätes für Steuerungen von Industrierobotern oder von sonstigen, mehrachsig steuerbaren Handhabungsgeräten. Diese Systeme zeichnen sich durch eine besonders intuitive Handhabung aus, wie dies vorhergehend erläutert wurde. Bei diesen Bewegungsvorgabemitteln werden für die Bestimmung ihrer Orientierung, Lage und Lageänderung, das heißt der Bewegung im Raum, unter anderem Inertialsensoren eingesetzt. Die genannten Größen können dann aus den sensorisch erfassten translatorischen und rotatorischen Beschleunigungswerten durch zweifache Integration berechnet werden.

Über die Inertialsensorik können aber nur Beschleunigungen unmittelbar gemessen werden, das heißt die Änderungen des Bewegungszustandes direkt erfasst werden. Für die fortwährende Bestimmung des Bewegungszustandes (=Geschwindigkeitswerte) bzw. von Bewegungsänderungen sowie der Orientierung und Lage des Bewegungsvorgabemittels, müssen zuerst einmalig die Position, Orientierung und der Bewegungszustand, d.h. die translatorischen und rotatorischen Geschwindigkeiten bestimmt werden. Dabei stellen natürlich auch Paramter bzw. Signale mit dem Betrag "Null" relevante, zu berücksichtigende Informationen dar. Diese Initialisierung bzw. ein solcher Abgleich geschieht üblicherweise und am einfachsten dadurch, dass eine bestimmte Kalibrierposition mit bekannter Ausrichtung sowie bekannter Position vorgesehen ist, das Bewegungsvorgabemittel an diese Kalibrierposition gebracht wird und dann dem Steuerungs- bzw. Auswertesystem per Tastendruck - oder auch automatisiert durch eine Anwesenheits- bzw. Ablageerkennung - mitgeteilt wird, dass sich das Bewegungsvorgabemittel an der Kalibierposition befindet, insbesondere in Ruhe ist und an der definierten Position und in der definierten Ausrichtung vorliegt. Dieser Vorgang wird als Kalibrierung oder Refenzierung bezeichnet. Ausgehend von diesem Kalibrierzustand kann im Wesentlichen durch rechnerische Vorgänge, insbesondere durch fortlaufende zweimalige Integration der gemessenen Beschleunigungen, die translatorische und rotatorische Geschwindigkeit sowie die Lage bzw. Orientierung im Raum ermittelt werden.

Die Signale der Inertialsensoren weisen jedoch in der Regel trotz Einsatz verschiedener Kompensations- und Korrekturverfahren gewisse Fehler auf, die sich bei der fortlaufenden Integration zur Geschwindigkeit, Position und Lage fortpflanzen und sich insbesondere mit der Zeit zu immer größeren Abweichungen aufsummieren und dann eine erneute Referenzierung erforderlich machen. Auch eine gewisse, unvermeidliche Drift der Sensoren beeinflusst die Berechnungsergebnisse ungünstig. Beispielsweise besteht eine Temperaturabhänigkeit der sensorischen Erfassungswerte und liegt außerdem eine beschränkte Genauigkeit der Sensoren vor.

Abweichungen in der technisch ermittelten, insbesondere in der berechneten Position gegenüber der Ist-Position werden in der Praxis teilweise dadurch egalisiert, dass vergleichbar zur Eingabe mit einer Computermaus immer nur stückweise und relative Positionsveränderungen in jeweils relativ kurzen Zeitabschnitten vorgenommen werden und daher die absolute Position des Bewegungsvorgabemittels im Raum an sich gar nicht benötigt wird. Jedoch führt ein größerer Fehler bei der technisch ermittelten Orientierung, d.h. bei einer Abweichung zwischen der tatsächlichen und der technisch ermittelten Ausrichtung bzw. Orientierung des Bewegungsvorgabemittels, auch bei kurzen und stückweisen Bewegungsvorgaben zu erheblichen und für die Bedienperson völlig unerwarteten Abweichungen von der beabsichtigten Wirkrichtung. Dies kann in der Folge zur Verwirrung und Verunsicherung der Bedienperson, zu falschen Korrekturbewegungen und zu einer Gefährdung von Anlagenteilen, Werkzeugen und Werkstücken führen. Die Auswirkungen solcher Orientierungsfehler sind anschaulich vergleichbar mit dem Fehler bei der Verwendung einer Computermaus, wenn diese stark verdreht in der Hand gehalten wird. Dies führt zu stark verwirrenden Cursorbewegungen bzw. Aktionen.

Kleinere Abweichungen zwischen der tatsächlichen Ausrichtung des Bewegungsvorgabemittels und der von der Steuerungs- bzw. Auswerteeinheit errechneten Ausrichtung werden von der Bedienperson ausreichend gut und in der Regel unbewusst ausgeglichen. Insbesondere durch die visuelle Überwachung der Bewegung des Industrieroboters werden kleine Abweichungen zwischen der gewollten Vorgabe und der tatsächlichen Verfahrbewegung durch eine entsprechende Anpassung der Bewegungsvorgabe kompensiert. Überschreiten die Abweichungen zwischen der berechneten und der tatsächlichen Ausrichtung hingegen ein gewisses Ausmaß, so ist eine Kompensation via das visuelle Feedback an die Bedienperson nicht mehr gegeben bzw. führt dies zu einer zunehmenden Verwirrung der Bedienperson. Dies ist vergleichbar zur Situation bei einer erheblich verdreht geführten Computermaus, bei der die Richtung der Cursorbewegung am Bildschirm nicht mehr schlüssig mit der Handbewegung korreliert und im Extremfall bei um nahezu 180° verdrehter Maus sogar genau gegensätzlich zur erwarteten Bewegung ausfällt. Dies bedeutet eine psychische bzw. gedankliche Belastung der Bedienperson und führt schließlich bei großen Abweichungen zu einer Gefährdung des Industrieroboters bzw. von Anlagenteilen, Werkzeugen und Werkstücken. In der Praxis ist daher vor allem bei den auf Inertialsensoren gestützten Bewegungsvorgabemitteln in regelmäßigen zeitlichen Abständen eine Neukalibrierung vorzunehmen, um den Fehler der berechneten Orientierung hinreichend klein zu halten.

Der vorliegenden Erfindung liegt die Aufgabe zugrunde, die Sicherheit bzw. Fehlerfreiheit in Verbindung mit einem händisch zu führenden Bewegungsvorgabemittel zum Programmieren oder Vorgeben von Bewegungen oder Abläufen eines Industrieroboters oder einer sonstigen, mehrachsig steuerbaren Handhabungsvorrichtung oder Werkzeugmaschine zu erhöhen.

Der vorliegenden Erfindung liegt insbesondere die Aufgabe zugrunde, eine hinreichend genaue Übereinstimmung zwischen der technisch ermittelten Orientierung und der tatsächlichen Orientierung eines Bewegungsvorgabemittels zu erzielen.

Die genannte Aufgabe wird jeweils unabhängig durch ein Verfahren nach Anspruch 1, durch ein Steuerungssystem nach Anspruch 18 sowie durch ein Bewegungsvorgabemittel nach Anspruch 20 gelöst.

Durch die jeweils angegebenen Maßnahmen werden besondere vorteilhafte Wirkungen und technische Effekte erzielt. Obwohl das Steuerungssystem bzw. das Bewegungsvorgabemittel selbst keine fortwährend aktuellen Informationen über das Ausmaß einer allfälligen Abweichung zwischen der ermittelten Orientierung und der Referenz- bzw. Vergleichsorientierung besitzen muss, können sicherheitskritische Zustände bzw. für die Bedienperson unangenehme Verhaltensweisen des Systems vermieden bzw. hintan gehalten werden. Insbesondere ist von Vorteil, dass die Bedienperson allfällige Abweichungen bzw. Abdriftungserscheinungen bezüglich der technischen Ermittlung von Orientierungsinformationen über das Bewegungsvorgabemittel nicht erst im Zuge von durchgeführten Bedienhandlungen spürt bzw. erfährt, sondern bereits im Vorfeld wahrnehmen und gegensteuern bzw. Gegenmaßnahmen ergreifen kann. Die Bedienperson kann also ein Eintreten von ungünstigen Situationen bzw. ein Auftreten von kritischen Bedienhandlungen im Zuge der Programmierung oder Vorgabe von Bewegung von Abläufen eines Industrieroboters minimieren bzw. vermeiden. Insbesondere kann die Bedienperson das eventuelle Erfordernis einer Neukalibrierung vorsorglich überprüfen bzw. erkennen und kann in der Folge durch Initiative der Bedienperson und/oder durch Aufforderung oder Anweisung vom Steuerungssystem ein Kalibriervorgang veranlasst bzw. durchgeführt werden. Im Zuge eines solchen Kalibriervorganges werden beispielsweise die Ausgangswerte bzw. die letztgültigen Werte des Steuerungssystems abgeglichen, um allfällige Abweichungen bzw. Drifterscheinungen bezüglich der Orientierungsermittlung zu egalisieren und die Genauigkeit des Programmierverfahrens bzw. der sogenannten "Teaching-Operation" zu erhöhen. Darüber hinaus kann dadurch die erforderliche Zeitdauer für das Handling bzw. die Programmierung reduziert werden, nachdem Fehlbedienungen bzw. unpräzise Bewegungsabläufe minimiert bzw. vermieden werden können. Insbesondere ist dadurch eine hinreichend genaue Übereinstimmung zwischen der technisch ermittelten Orientierung und der tatsächlichen Orientierung eines Bewegungsvorgabemittels im Vorfeld überprüfbar bzw. erkennbar, ohne dass eine versuchsweise Verfahrbewegung durch eine Bedienperson erforderlich ist, was letztlich auch das Vertrauen der Bedienperson in die benutzte technische Bedieneinrichtung steigert.

Beispielsweise nach einer Unterbrechung der Bedienhandlungen über einen gewissen Zeitraum hat die Bedienperson keinerlei Hinweis auf das zwischenzeitliche Ausmaß des Orientierungsfehlers. Bislang hatte die Bedienperson vor einer Wiederaufnahme der Bedienhandlungen eigentlich nur die Möglichkeit, einen vorsichtigen Versuch einer Bewegungsvorgabe mit einer visuellen Überprüfung der erzielten Verfahrbewegung zu starten, oder andernfalls eine vorsorgliche Kalibrierung bzw. Neuabstimmung durchzuführen, was natürlich Zeit beansprucht. Erfindungsgemäß ist es einer Bedienperson nunmehr ermöglicht, bereits vorab zu überprüfen, ob eine hinreichend exakte Übereinstimmung der technisch bzw. rechnerisch ermittelten Orientierung mit der tatsächlichen Orientierung bzw. mit der Vergleichsorientierung vorliegt. Es ist also nunmehr ermöglicht, das Ausmaß eines allfälligen Orientierungsfehlers früh- bzw. rechtzeitig, insbesondere vorsorglich in Erfahrung zu bringen. Dies ist gerade vor besonders heiklen Feinpositionierungen mit geringem Bewegungsspielraum für den Industrieroboter vorteilhaft. Aber auch während fortgesetzter Bewegungsvorgaben ist die gelegentliche Überprüfung des Ausmaßes eines allfälligen Orientierungsfehlers mitunter von Vorteil.

Von Vorteil sind weiters die Maßnahmen gemäß Anspruch 2, da dadurch auch relativ kostengünstige bzw. weit verbreitete Inertialsensoren für relativ anspruchsvolle industrielle Anwendungen anwendbar gemacht werden bzw. einsatztauglich werden. Insbesondere kann trotz des Einsatzes einer Intertialsensorik, welche zur Messung von translatorischen und rotatorischen Beschleunigungskräften konzipiert ist und welche Inertialsensorik systembedingt gewisse Ungenauigkeiten in der technischen Ermittlung von wechselnden Orientierungen und gegebenenfalls von wechselnden Positionen im Raum aufweist bzw. verursacht, auch für industrielle Anwendungen eine ausreichend präzise bzw. zuverlässige Ermittlung der wechselnden Orientierungsinformationen bezüglich des Bewegungsvorgabemittels erzielt werden. Die auf den sensorischen Werten der Intertialsensorik und auf deren rechnerische Weiterverarbeitung basierenden Orientierungs- und gegebenenfalls Positionsinformationen werden also durch die angegebenen Maßnahmen wesentlich zuverlässiger ermittelt bzw. exakter weiterverarbeitet. Die Inertialsensorik ist insbesondere unempfindlich gegenüber magnetischen oder elektromagnetischen Störeinflüssen und wird auch nicht durch Lärm, Dämpfe, Nebel, Feuchtigkeit oder durch Verschmutzung beeinträchtigt, wodurch sie für den Einsatz unter industriellen Umgebungsbedingungen besondere Vorzüge bietet.

Von Vorteil ist auch die Weiterbildung nach Anspruch 3. Die Bedienperson richtet dabei das Bewegungsvorgabemittel entsprechend der ihr bekannten Vergleichsorientierung zumindest näherungsweise aus. Eine Auswertungseinheit bzw. Steuervorrichtung, welche im Bewegungsvorgabemittel und/oder in einer dazu peripheren Elektronikeinheit des Steuerungssystems implementiert sein kann, stellt die Abweichung zwischen der technisch ermittelten Orientierung und der vordefinierten bzw. hinterlegten Vergleichsorientierung fest und bewertet diese Abweichung unter der Annahme, dass das Bewegungsvorgabemittel tatsächlich entsprechend der Vergleichsorientierung ausgerichtet ist. Die Bedienperson erhält sodann eine einfach erfassbare qualitative Aussage über das Vorliegen oder Nicht-Vorliegen einer hinreichend genauen Orientierungserfassung.

Bei den Maßnahmen nach Anspruch 4 ist von Vorteil, dass die Bedienperson eine quantitative Aussage über das Ausmaß sowie gegebenenfalls über die Richtung des Orientierungsfehlers erhält. Die Handhabung bzw. die Benutzerfreundlichkeit kann dadurch weiter gesteigert werden.

Insbesondere kann die Signalisierung der Abweichung auch mehrstufig bzw. quasi analog erfolgen, so dass der Benutzer eine ausreichend genaue Information über das Ausmaß und gegebenenfalls auch über die Richtung der Abweichung bekommt. Eine solche Signalisierung kann beispielsweise optisch durch die Blinkfrequenz einer LED, oder akustisch durch Tonfrequenz, Pulsfrequenz oder Lautstärke, sowie taktil durch Vibration oder Impuls erfolgen. Weiters kann auf diese Weise durch Verschwenken des Bewegungsvorgabemittels von der Bedienperson auch relativ einfach die vom Steuerungssystem bzw. die von der Lage- bzw. Positionsauswertung detektierte bzw. durch Rechenoperationen näherungsweise bestimmte Referenzorientierung ermittelt werden. Das heißt, dass dadurch von der Bedienperson jene Orientierung, für welche der signalisierte Fehler minimal ist, insbesondere nahezu null wird, einfach und rasch eruiert werden kann, so dass dann die Bedienperson durch Vergleich der tatsächlichen Ausrichtung des Bewegungsvorgabemittels mit der ihr bekannten Referenz- bzw. Vergleichsorientierung über die Zweckmäßigkeit einer Neukalibrierung entscheiden kann.

Von Vorteil sind auch die Maßnahmen gemäß Anspruch 5, da dadurch erst dann eine aktive Signalisierung erfolgt, wenn die Abweichungen in Bezug auf die Orientierungsinformationen ein tolerierbares bzw. unkritisches Maß überschreiten. Alternativ oder in Kombination dazu kann vorgesehen sein, ein Feedback zu geben, wenn die Abweichungen marginal sind oder eventuell wieder innerhalb des Toleranzbandes liegen. Die Konzentration der Bedienperson kann dadurch auf ihre eigentlichen Kernaufgaben gerichtet bleiben und sind unnötige Ablenkungen bzw. Informationsüberflutungen vermieden. Im einfachsten Ausführungsfall wird der Bedienperson nur binär, beispielsweise mittels einer LED, signalisiert, ob die ermittelte Orientierung unter Berücksichtigung einer maximal zulässigen Abweichung, welche beispielsweise mit 20° bzw. mit +/-10° bezogen auf jede Koordinatenachse vordefiniert sein kann, mit der Referenz- bzw. Vergleichsorientierung übereinstimmt. In der Folge kann die Bedienperson bei einer Überschreitung des Limits rechtzeitig eine Neukalibrierung vornehmen bzw. veranlassen.

Entsprechend der vorteilhaften Maßnahme nach Anspruch 6 erfolgt die Signalisierung nur bedarfsweise. Dies ist insbesondere dann von Bedeutung, wenn das dafür vorgesehene Ausgabemittel, beispielsweise ein kleines Display oder ein akustisches Ausgabemittel, auch noch für andere Zwecke verwendet wird oder eine ständige Ausgabe von der Bedienperson als störend bzw. als Ablenkung empfunden wird. Darüber hinaus können dadurch Einsparungen beim elektrischen Energieverbrauch erzielt werden, was insbesondere in Verbindung mit einem batterie- bzw. akkugespeisten Bewegungsvorgabemittel vorteilhaft ist. Die allfällige Signalisierung in Bezug auf wenigstens eine Körperachse, vorzugsweise bezüglich der Längsachse des Bewegungsvorgabemittels bietet den Vorteil einer raschen und eindeutigen Evaluierung der jeweils vorliegenden Zustände in Bezug auf die steuerungstechnische Ermittlung der Orientierungsinformationen.

Durch die Maßnahmen der vorteilhaften Weiterbildung nach Anspruch 7 kann auf technisch einfache und gleichzeitig für die Bedienperson intuitive und rasch erfassbare Weise eine grundsätzliche, binäre Information bzw. auch eine quantitative Information über das Ausmaß der Abweichung und/oder Übereinstimmung der steuerungstechnisch ermittelten Orientierungsdaten vermittelt werden.

Beim Vorhandensein komplexerer optischer Ausgabemittel, wie beispielsweise einer 7-Segment-Anzeige, einer Punktmatrixanzeige bzw. einem hochauflösenden Display kann gemäß der Ausführungsform nach Anspruch 8 die Darstellung der Abweichungsinformation auch eine Richtungsinformation beinhalten, etwa vergleichbar mit einem Nordpfeil, der die Richtung anzeigt, in der eine bestimmte Achse der Referenz- bzw. Vergleichsorientierung gemäß dem elektronischen Auswertungsergebnis angenommen wird. Der Benutzer kann dann die dargestellte Richtung mit der ihm bekannten, tatsächlichen Referenz- bzw. Vergleichsrichtung vergleichen und im Falle einer zu großen Abweichung eine Neukalibrierung vornehmen. Dabei kann vorgesehen sein, dass die Bedienperson das Bewegungsvorgabemittel nicht erst speziell ausrichten muss, sondern kann die Bedienperson den Vergleich anhand der grafischen Darstellung am Ausgabemittel und der ihr bekannten Ausrichtung der Vergleichsorientierung durchführen.

Entsprechend einer zweckmäßigen Ausgestaltung kann die Orientierungsinformation durch ein am Ausgabemittel visualisiertes dreidimensionales Symbol bzw. Objekt, beispielsweise durch einen dreidimensional dargestellten Pfeil, repräsentiert sein. Anhand dieses am Ausgabemittel dreidimensional dargestellten Objektes kann dann von der Bedienperson auf die jeweilige räumliche Orientierungsabweichung zwischen der steuerungstechnisch ermittelten Orientierungsinformation und der vordefinierten Vergleichsorientierung besonders unmissverständlich und zugleich umfassend Rückschluss gezogen werden.

Weiters kann durch die Maßnahmen nach Anspruch 9 mittels technisch einfacher Ausgabemittel, aber dennoch in einer für die Bedienperson intuitiven und rasch erfassbaren Weise eine quantitative Information über das Ausmaß einer Abweichung vermittelt werden.

Entsprechend der Ausgestaltung nach Anspruch 10 kann beispielsweise ein kurzes Signal ausgegeben werden, sobald die Ausrichtung des Bewegungsvorgabemittels oder eine Achse des gerätefesten Koordinatensystems, durch welches die Orientierung des Bewegungsvorgabemittels definiert ist, im Wesentlichen parallel zu einer der Ebenen ist, die durch die Hauptachsen des Koordinatensystems aufgespannt werden, durch welches die Vergleichsorientierung definiert ist. Beispielsweise ist dabei die x-Achse dieses Koordinatensystems durch die Längsachse und die y-Achse durch die Querachse des Bewegungsvorgabemittels definiert. Wenn dann die Bedienperson das Bewegungsvorgabemittel näherungsweise entsprechend der Vergleichsorientierung ausrichtet und sodann mit dem Bewegungsvorgabemittel kleine Pendelbewegungen um die Hoch-, Quer- und Längsachse durchführt, kann impulsartig signalisiert werden, sobald die Ausrichtung hinsichtlich dieser Pendelachse im Wesentlichen mit der Vergleichsorientierung übereinstimmt. Bleibt die Signalisierung aus oder erfolgt sie zu weit abseits von der Vergleichsorientierung, kann die Bedienperson daraus auf eine notwendig gewordene Kalibrierung schließen. Einer der Vorteile dieser Lösung ist eine überaus einfache Signalisierung die nur minimale Voraussetzungen hinsichtlich der benötigten Ausgabemittel erfordert.

Vorteilhaft ist auch eine Ausgestaltung nach Anspruch 11, da hierbei die Vergleichsorientierung üblicherweise mit der Ausrichtung markanter baulicher Konstruktionsteile übereinstimmt und somit für die Bedienperson rasch und unmissverständlich erkennbar ist.

Besonders vorteilhaft sind auch die Maßnahmen nach Anspruch 12, da beim Bedienen eines Industrieroboters üblicherweise gute Sicht auf dessen Achsen und insbesondere auf das Werkzeug besteht. Zudem ist die Ausrichtung der Achsen auch dem Steuerungssystem bzw. der Steuerung jederzeit bekannt bzw. durch die Steuerung ermittelbar, wodurch wenigstens eine dieser Achsen sehr gut als Referenz- bzw. Vergleichsorientierung verwendbar ist.

Auch durch die Maßnahmen nach Anspruch 13 ist die Vergleichsorientierung auf eine für die Bedienperson einfach erfassbare Weise festgelegt. Eine Aufnahme- bzw. Kalibriervorrichtung oder eine Kennzeichnung, die im Zuge der initialen oder periodischen Kalibrierung Verwendung findet, definiert dabei gleichzeitig die Vergleichsrichtung für die spätere, sporadische bzw. bedarfsweise Ermittlung und Bewertung des Orientierungsfehlers.

Von Vorteil sind weiters die Maßnahmen gemäß Anspruch 14, da dadurch von der Bedienperson aktiv und bewusst eine Annullierung bzw. Egalisierung einzuleiten ist, durch welche Abweichungen betreffend die technischen Ermittlungsergebnisse ausgeglichen werden. Ein für die Bedienperson überraschendes bzw. unvorhergesehen andersartiges Betriebsverhalten des technischen Systems kann dadurch vermieden werden.

Sicherheitstechnisch vorteilhaft sind weiters die Maßnahmen nach Anspruch 15, da dadurch die Annullierung bzw. Egalisierung durch die Bedienperson nur dann vorgenommen wird, wenn die ermittelte Abweichung zur Referenz- bzw. Vergleichsorientierung ein gewisses Ausmaß nicht überschreitet. Dadurch wird die Gefahr verringert, dass entweder bei einem völligen Irrtum der Bedienperson bezüglich der Vergleichsorientierung oder bei einer Fehlbedienung ein marginaler Fehler bei der technisch ermittelten Orientierung durch einen unpassenden Quittierungsbefehl der Bedienperson fälschlicherweise vergrößert wird.

Ebenfalls aus Sicherheitsgründen vorteilhaft sind die Maßnahmen nach Anspruch 16, da dadurch die weitere Abgabe von Verfahrkommandos mittels dem Bewegungsvorgabemittel unterbunden wird, sobald die festgestellte Abweichung ein gewisses Ausmaß überschreitet.

Dadurch wird die Gefahr verringert, dass die Bedienperson etwa das Ausmaß der Abweichung falsch einschätzt oder die signalisierte Überschreitung ignoriert und es in der Folge zu einer potenziell gefährlichen Bedienhandlung bzw. zu Beeinträchtigungen der Sicherheit von Personen oder Sachgütern kommt.

Vorteilhaft sind auch die Maßnahmen gemäß Anspruch 17, da dadurch ein visuelles Feedback an die Bedienperson und eine umgehende Korrektur der Bewegung oder Position des Bewegungsvorgabemittels seitens der Bedienperson ermöglicht ist bzw. vorgenommen werden kann, um schließlich den Industrieroboter bzw. dessen Werkzeug oder Greifer in der gewünschten Weise zu positionieren. Hierfür ist vor allem der intuitive und klare Zusammenhang zwischen der gewünschten Bewegung des Industrieroboters und der dafür notwendigen Bewegung des Bewegungsvorgabemittels wesentlich. Die Bedienperson stellt somit automatisch eine Art "menschlicher Regler" dar, welcher Abweichungen zwischen der gewünschten Position bzw. der Soll-Position und der Ist-Position durch entsprechendes Führen des Bewegungsvorgabemittels mehr oder weniger stark ausregelt bzw. mehr oder weniger kompensiert. Dies ist nur in Verbindung mit einer möglichst zeitgleichen bzw. synchronen Ausführung von Bewegungsvorgaben durch die Bedienperson sowie einer korrespondierenden Umsetzung durch den Industrieroboter möglich.

Die Aufgabe der Erfindung wird auch durch ein Steuerungssystem gemäß Anspruch 18 bzw. 19 sowie durch ein Bewegungsvorgabemittel nach Anspruch 20 bzw. 21 gelöst. Die jeweils erzielbaren Wirkungen bzw. technischen Effekte und Vorteile sind der vorhergehenden Beschreibung sowie den nachfolgenden Beschreibungsteilen zu entnehmen.

Insbesondere sind die durch das angegebene Verfahren erzielbaren technischen Effekte und Vorteile analog auf die beanspruchten Vorrichtungen zu übertragen, wobei diese Übertragung im Rahmen des fachmännischen Könnens liegt, welches zumindest teilweise im Zusammenhang mit den Lehren aus der gegenständlichen Offenbarung aufgebaut wird.

Bei der Ausgestaltung nach Anspruch 22 ist von Vorteil, dass das Bewegungsvorgabemittel ein komfortables bzw. von Kabelverbindungen ungestörtes Bedienverhalten aufweist und eine typischerweise erforderliche, erhöhte Rechenleistung örtlich verteilt werden kann bzw. von stationären, leistungsstarken Rechen- bzw. Steuerungseinheiten angefordert bzw. genutzt werden kann. Darüber hinaus kann dadurch das Ergebnis der Auswertungen in einfacher Art und Weise auch zu örtlich verteilt angeordneten Komponenten des Steuerungssystems übertragen und entsprechend verwertet werden.

Schließlich ist eine Ausführung nach Anspruch 23 vorteilhaft, da dadurch für die Bedienperson augenscheinlich und rasch erkennbar ist, in welchem Ausmaß und gegebenenfalls in Bezug auf welche Richtung eine Abweichung zwischen der technisch ermittelten Orientierung und der Referenz- bzw. Vergleichsorientierung vorliegt.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel eines Steuerungssystems für einen Industrieroboter, in welchem ein händisch zu führendes Bewegungsvorgabemittel zur Generierung von Steueranweisungen für den Industrieroboter eingesetzt wird;
- Fig. 2: Ausführungsbeispiele bei welchen ein im Raum geführtes Bewegungsvorgabemittel Übereinstimmung zwischen den technisch ermittelten Orientierungsinformationen und einer Vergleichsorientierung signalisiert;
- Fig. 3: zwei Fallbeispiele in welchen einerseits eine Diskrepanz und andererseits eine Übereinstimmung zwischen technisch ermittelteter Orientierungsinformation und Vergleichsorientierung signalisiert ist;
- Fig. 4: weitere Fallbeispiele für Überprüfungen bezüglich präziser und fehlerhafter Ermittlungen von Orientierungsinformationen betreffend das Bewegungsvorgabemittel;
- Fig. 5: weitere Fallbeispiele in Bezug auf eine Überprüfung und Anzeige von Ergebnissen einer technisch ermittelten Orientierung bzw. Lage gegenüber einer Vergleichsorientierung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die Ausführungsbeispiele zeigen mögliche Ausführungsvarianten des beanspruchten Verfahrens bzw. Systems, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzumfang mit umfasst.

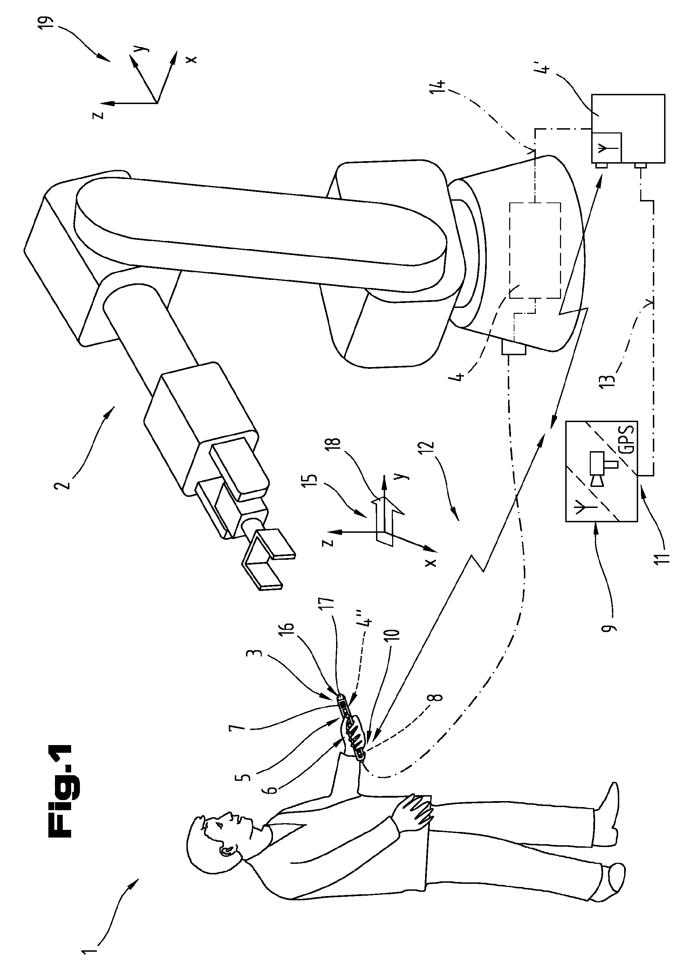

In Fig. 1 ist ein Ausführungsbeispiel eines Steuerungssystems 1 für einen Industrieroboter 2 schematisch und beispielhaft veranschaulicht. Mittels eines solchen Steuerungssystems 1, in welchem ein händisch zu führendes Bewegungsvorgabemittel 3 zur Generierung von Steuerungsanweisungen für den Industrieroboter 2 eingesetzt wird, ist eine Programmierung oder Vorgabe von Bewegungen oder Abläufen des Industrieroboters 2 ermöglicht. Dieser Industrieroboter 2 kann durch eine aus dem Stand der Technik bekannte, mehrachsige Manipulatoreinheit oder durch ein sonstiges Handling-Aggregat gebildet sein, mit welchem technische Prozesse, beispielsweise Schweiß- oder Lackierprozesse oder Handlingprozesse für Werkstücke, automatisiert oder teilautomatisiert ausgeführt werden können.

Dem zumindest einen Industrieroboter 2 innerhalb des Steuerungssystems 1 ist zumindest eine integrierte und/oder externe Steuervorrichtung 4, 4', 4" zugeordnet. Das Steuerungssystem 1 kann durch beliebige aus dem Stand der Technik bekannte, elektrotechnische Steuervorrichtungen 4, 4', 4" gebildet werden, wobei je nach technologischem Bedarf zentrale und/oder dezentrale Steuerungsarchitekturen eingesetzt sein können. Insbesondere kann durch ein Zusammenwirken mehrerer integrierter und/oder externer Steuervorrichtungen 4, 4', 4" ein verteiltes Steuerungssystem 1 aufgebaut werden, um die jeweiligen Steuerungsabläufe für einen mehrachsigen Industrieroboter 2 bewerkstelligen zu können.

Zusätzlich zu diesem händisch zu führenden Bewegungsvorgabemittel 3 kann ein nicht dargestelltes, mobiles Handterminal vorgesehen sein. Ein solches mobiles Handterminal weist eine hohe Funktionsdichte bzw. Funktionsvielfalt auf und stellt ein relativ hochentwickeltes Bedien- und Beobachtungsgerät für die jeweiligen Steuerungsabläufe im Steuerungssystem 1 dar.

Das händisch zu führende Bewegungsvorgabemittel 3 kann zumindest eine Sicherheitsschalteinrichtung 5, insbesondere wenigstens einen Zustimmtaster 6 aufweisen, welcher zur bedienerseitigen Signalisierung einer Zustimmung zur Ausführung potentiell gefahrbringender Bewegungen oder Ablaufveränderungen vorgesehen ist.

Das händisch im Raum zu führende Bewegungsvorgabemittel 3 ist möglichst leicht und kompakt aufgebaut, bevorzugt stiftartig oder pistolenartig ausgeführt, um eine intuitive und möglichst bequeme Bewegungsvorgabe gegenüber dem Industrieroboter 2 zu erreichen. Zur Interaktion zwischen Bedienperson und Steuerungssystem 1 kann das Bewegungsvorgabemittel 3 diverse Ein- und Ausgabeelemente, beispielsweise Tasten, Schalter, Leuchtdioden oder ein kleines Display aufweisen. Insbesondere kann am händisch zu führenden Bewegungsvorgabemittel 3 wenigstens ein manuell zu betätigendes Bedienelement 7, beispielsweise in Form von wenigstens einem Taster, eines 4-Quadranten-Tasterelementes, eines Stellrades, eines miniaturisierten Joysticks oder dgl., ausgeführt sein. Mit diesem Bedienelement 7 ist es der Bedienperson ermöglicht, mit dem Steuerungssystem 1 zu interagieren bzw. Bewegungen oder Abläufe des Industrieroboters 2 bzw. einer sonstigen mehrachsig steuerbaren Maschine zu beeinflussen.

Wesentlich ist, dass mit dem von der Bedienperson händisch und dabei im Raum relativ frei zu führenden Bewegungsvorgabemittel 3 zumindest ein Teil der Daten für die Bewegungsteuerung oder Ablaufprogrammierung des Industrieroboters 2 generiert wird. Hierzu gibt die Bedienperson mittels dem Bewegungsvorgabemittel 3 quasi eine Sollbewegung und/oder eine Sollposition bzw. Sollorientierung vor, welche vom Steuerungssystem 1 derart umgesetzt wird, dass der zu steuernde bzw. zu bedienende Industrieroboter 2 vorgabegemäße Bewegungen oder Sollpositionen einnimmt bzw. vorgabegemäße Veränderungen im jeweiligen, technischen Ablauf bzw. Prozessablauf umgesetzt werden. Das händisch zu führende Bewegungsvorgabemittel 3 weist eine integrierte Sensorik 8 auf bzw. ist dem händisch zu führenden Bewegungsvorgabemittel 3 eine externe Sensorik 9 zugeordnet, über welche die Orientierung und/oder die Position des händisch geführten Bewegungsvorgabemittels 3 im Raum ermittelt bzw. ausgewertet wird. Die Informationen bzw. Daten der integrierten und/oder externen Sensorik 8, 9 stellen sodann zumindest einen Teil jener Daten bzw. Steuerbefehle dar, welche für die Bewegungssteuerung oder Ablaufprogrammierung des Industrieroboters 2 verwendet bzw. benötigt werden.

Das Bewegungsvorgabemittel 3 kann entsprechend einer möglichen Ausführungsform ausschließlich eine integrierte Sensorik 8 umfassen und somit quasi als aktives Bewegungsvorgabemittel 3 fungieren. Alternativ dazu kann das Bewegungsvorgabemittel 3 auch passiv ausgeführt sein, wobei über eine externe Sensorik 9 die entsprechenden Orientierungs- und/oder Positionsdaten ermittelt werden bzw. deren zeitliche Veränderung aufgezeichnet wird. Selbstverständlich ist auch eine Kombination aus integrierter und externer Sensorik 8, 9 möglich, um beispielsweise eine besonders zuverlässige bzw. hochgenaue Ermittlung von Orientierungs- bzw. Positionsdaten des Bewegungsvorgabemittels 3 in Bezug auf den dreidimensionalen Raum zu erzielen. Unter dem Begriff Sensorik 8, 9 ist neben den eigentlichen sensorischen Erfassungsmitteln auch ein entsprechendes Auswertungsmittel, insbesondere eine elektronische Aufbereitungs- und Auswertungsvorrichtung zu verstehen, welche die sensorisch erfassten Signale bzw. Informationen in von den Steuerungskomponenten des Steuerungssystems 1 verwertbare bzw. weiterverarbeitbare Daten bzw. Schnittstellenprotokolle transferiert.

Die jeweilige Sensorik 8, 9 kann dabei durch beliebige aus dem Stand der Technik bekannte Erfassungs- und Auswertemittel gebildet sein, um die Orientierung und/oder die Position von Objekten im Raum daten- bzw. steuerungstechnisch ermitteln bzw. bestimmen zu können. Insbesondere können hierfür sogenannte Inertial-Sensoriken vorgesehen sein, welche vorzugsweise die im Bewegungsvorgabemittel 3 integrierte Sensorik 8 definieren. Mittels diesen Inertial-Sensoren, welche aus Intertial-Gebern, Beschleunigungsaufnehmern und gegebenenfalls Magnetfeldsensoren bestehen können, kann eine rechnergestützte Ermittlung von Orientierungs- bzw. Positionsdaten und deren Veränderung vorgenommen werden.

Die Umsetzung und Zweckmäßigkeit der Erfindung wird hier schwerpunktmäßig im Zusammenhang mit dem Einsatz von Inertialsensoren beschrieben. Aber auch bei Verwendung anderer Sensortechnologien für die Bestimmung der Orientierung können vor allem aufgrund der unter industriellen Einsatzbedingungen auftretenden, erhöhten Störpegel fehlerhafte Orientierungsinformationen resultieren, die speziell bei heiklen Verfahrbewegungen eine Vorabüberprüfung zweckmäßig machen. Die hierin angegebenen Maßnahmen ermöglichen der Bedienperson unabhängig von der Art der zur Positions- bzw. Bewegungsbestimmung verwendeten Sensorik auf einfache Weise die Überprüfung der Zuverlässigkeit der intern ermittelten und verarbeiteten Orientierungsinformation, ohne dafür versuchsweise Verfahrbewegungen mit dem Industrieroboter 2 durchführen zu müssen. Die Sensorik 8, 9 kann dabei auch aus dem Stand der Technik bekannte Triangulationsverfahren für übertragene Signale mit bestimmter Laufzeit, optische Bilddatenerfassungen unter Zuhilfenahme von Videokameras, oder sonstige Positionserfassungssysteme, wie zum Beispiel GPS oder lokale Positionserfassungssysteme umfassen. Wichtig ist, dass die jeweils ausgebildete Sensorik 8 bzw. 9 eine ausreichend genaue und zuverlässige Ermittlung der Orientierung und/oder Position des händisch zu führenden Bewegungsvorgabemittels 3 ermöglicht.

Entsprechend einer vorteilhaften Ausprägung kann vorgesehen sein, dass die Orientierung des Bewegungsvorgabemittels 3 im Raum ermittelt und damit weiters die Wirkrichtung der am Bewegungsvorgabemittel 3 richtungsbezogen angeordneten Bedienelemente 7 zur Bewegungsauslösung bzw. Bewegungseinleitung so in das Koordinatensystem des Industrieroboters 2 transformiert wird, dass der Richtungsbezug am Bewegungsvorgabemittel 3 mit der tatsächlichen bzw. gewünschten Bewegungsrichtung des Industrieroboters 2 übereinstimmt. Gemäß einer weiteren vorteilhaften Ausführungsform kann vorgesehen sein, dass das Bewegungsvorgabemittel 3 quasi wie ein virtueller Handgriff für den Endeffektor des Industrieroboters 2 wirkt und die Positions- und Richtungsänderungen des Bewegungsvorgabemittels 3 in gleichartige Bewegungen des Industrieroboters 2 transformiert werden.

Zweckmäßig ist es, wenn die Steuerbefehle, die auf einer Vorgabe durch das händisch zu führende Bewegungsvorgabemittel 3 basieren, vom Industrieroboter 2 im wesentlichen unverzögert, insbesondere in Echtzeit, in korrespondierende Bewegungen oder Ablaufveränderungen umgesetzt werden. Eine der Voraussetzungen für die Umsetzung der bedienerseitigen Bewegungsvorgaben durch den Industrieroboter 2 besteht dabei darin, dass die von der Bedienperson vorgegebene Bewegung oder Ablaufveränderung unter Berücksichtigung von vordefinierten technischen Beschränkungen des Industrieroboters 2, wie beispielsweise einer aufbau- oder umgebungsbedingten Erreichbarkeit von Positionen oder Orientierungen, oder einer technisch erreichbaren, oder einer sicherheitstechnisch zulässigen, maximalen Geschwindigkeit von Achsen oder Stellelementen des Industrieroboters 2, technisch ausführbar ist. Neben der technischen Ausführbarkeit soll die ausgeführte Bewegung des Industrieroboters 2 aber auch dem tatsächlichen Willen der Bedienperson in allen Situationen weitestgehend entsprechen und ist es daher ein Aspekt der angegebenen Maßnahmen, dass identifizierbare Störeinflüsse oder Diskrepanzen automatisiert oder automationsunterstützt überprüft und gegebenenfalls kompensiert werden.

Die im händisch zu führenden Bewegungsvorgabemittel 3 integrierte Sensorik 8 und/oder die externe Sensorik 9 weist entsprechend einer zweckmäßigen Ausgestaltung zumindest eine Datenschnittstelle 10, 11 auf, über welche zumindest Daten für die Bewegungssteuerung oder Ablaufprogrammierung über zumindest eine dazugehörige Datenverbindung 12, 13, 14 direkt oder indirekt an die Steuervorrichtung 4 übermittelt werden, welche Steuervorrichtung 4 zur Veränderung von Zuständen des Industrieroboters 2, wie dies in Fig. 1 schematisch veranschaulicht wurde, ausgebildet ist. Die Datenverbindung 12 kann dabei als direkte Verbindung zwischen der Sensorik 8 bzw. dem Bewegungsvorgabemittel 3 und der Steuervorrichtung 4 ausgebildet sein, oder - wie schematisch dargestellt - als indirekte Datenverbindung 12, 14 über eine der Steuervorrichtung 4 vorgeschaltete Zwischen- oder Basisstationen bzw. Steuervorrichtung 4' ausgeführt sein. Alternativ oder in Kombination dazu kann auch eine indirekte Datenverbindung 13, 14 vorgesehen sein, welche ausgehend von der externen Sensorik 9 über eine oder mehrere elektronische Zwischen- oder Basisstationen bzw. Steuervorrichtungen 4' zur Steuervorrichtung 4 des Industrieroboters 2 verläuft.

Die Datenverbindung 12, 13 bzw. 14 kann dabei drahtgebunden oder kabellos ausgeführt sein. Wesentlich ist, dass die von der Sensorik 8 ermittelten Beschleunigungswerte und/oder die von der Sensorik 9 ermittelten Orientierungs- bzw. Positionsdaten des Bewegungsvorgabemittels 3 via eine geeignete Datenverbindung 12, 13 bzw. 14 an die Steuervorrichtung 4 übermittelt werden und von dieser zumindest teilweise verwertet bzw. weiterverarbeitet werden, bevor die entsprechenden Steuerkommandos bzw. Steuerbefehle des Bewegungsvorgabemittels 3 vom Industrieroboter 2 ausgeführt werden.

Entsprechend einer zweckmäßigen Maßnahme kann vorgesehen sein, dass vom händisch zu führenden Bewegungsvorgabemittel 3 ausgehende Steuerbefehle vom Industrieroboter 2 nur dann umgesetzt werden, wenn gleichzeitig die Sicherheitsschalteinrichtung 5, insbesondere wenigstens ein Zustimmtaster 6, am Bewegungsvorgabemittel 3 durch eine Bedienperson manuell derart betätigt wird, dass eine Zustimmung zur Ausführung von potentiell gefährdenden Bewegungen oder eine Zustimmung zur Veränderung von potentiell sicherheitskritischen Abläufen des Industrieroboters 2 signalisiert wird. Diese Signalisierung wird von der Bedienperson durch Betätigung des Zustimmtasters 6 ausgelöst und vom Steuerungssystem 1 bzw. vom Bewegungsvorgabemittel 3 oder der Steuervorrichtung 4 als aktive bzw. bewusste Zustimmung zur Ausführung potentiell gefahrbringender Aktionen erkannt. Damit werden vor allem unbeabsichtigte bzw. ungewollte Auslösungen von Aktionen bzw. unabsichtliche Einleitungen von Bewegungen des Industrieroboters 2 in hohem Ausmaß vermieden.

Wie in Fig. 1 schematisch dargestellt, kann die Datenverbindung 12 zwischen der im Bewegungsvorgabemittel 3 integrierten Sensorik 8 und der Steuervorrichtung 4 bzw. 4' durch eine Funkverbindung umgesetzt sein. Alternativ ist es ebenso möglich, die Datenverbindung 12 durch eine Leitungsverbindung auszuführen, wie dies in strichpunktierten Linien dargestellt wurde. Aufgrund der unmittelbaren Nähe zwischen dem Bewegungsvorgabemittel 3 und dem Industrieroboter 2 bzw. dessen Steuervorrichtung 4 ist nämlich auch die Ausbildung einer Leitungsverbindung ohne wesentliche Einbußen an Komfort bzw. Ergonomie möglich.

Die Datenschnittstelle 10 und die damit korrespondierende, weitere Datenschnitt-stelle an der Steuervorrichtung 4 bzw. 4' können also durch funktechnische Sende- und/oder Empfangsvorrichtungen zum Senden und/oder Empfangen elektromagnetischer Wellen gebildet sein. Diese Sende- und/oder Empfangsvorrichtungen können dabei durch Vorrichtungen entsprechend dem Bluetooth-, WLAN- oder ZigBee-Standard und durch ähnliche aus dem Stand der Technik bekannte, drahtlose Datenübertragungssysteme gebildet sein.

Alternativ ist es auch möglich, dass die Datenschnittstelle 10 im bzw. am Bewegungsvorgabemittel 3 zum Aufbau einer draht- oder kabelgebundenen Datenverbindung vorgesehen ist. Hierfür ist die Datenschnittstelle 10 und die damit korrespondierende, weitere Datenschnittstelle durch elektrische Leitungsschnittstellen gebildet, zwischen welchen eine Kabelverbindung aufgebaut ist, wie dies mit strichpunktierten Linien angedeutet wurde.

Entsprechend einer vorteilhaften Maßnahme ist vorgesehen, dass über die Datenverbindung 12 bzw. 12, 14 zwischen dem händisch geführten Bewegungsvorgabemittel 3 und der Steuervorrichtung 4 zusätzlich zu Informationen über den jeweiligen Betätigungszustand des Bedienelementes 7, welches zum bedienerseitigen Starten oder Auslösen der entsprechenden Bewegungen oder Abläufe des Industrieroboters 2 vorgesehen ist, auch Daten betreffend die Orientierung und/oder die Position des händisch zu führenden Bewegungsvorgabemittels 3 in Bezug auf den dreidimensionalen Raum an die Steuervorrichtung 4 übertragen werden.

Ein Bewegungsvorgabemittel 3 gemäß der zuvor beschriebenen Art weist also wenigstens ein Mittel auf bzw. ist dem Bewegungsvorgabemittel 3 wenigstens ein Mittel, insbesondere die interne und/oder eine externe Sensorik 8, 9 zugeordnet, welches Mittel zur Bestimmung der Orientierung und/oder Lage des Bewegungsvorgabemittels 3 im Raum ausgebildet ist. Diese Informationen können dazu genutzt werden, um die Wirkung eines vorhergehend genannten Bedienelementes 7 für die Positionierung eines Industrieroboters 2 oder einer Werkzeugmaschine abhängig von der Orientierung und/oder Lage des Bewegungsvorgabemittels 3 zu gestalten. Insbesondere kann vorgesehen sein, dass eine Bewegung des Bewegungsvorgabemittels 3 oder die Auslenkung eines Bedienelementes 7 am Bewegungsvorgabemittel 3 in eine bestimmte Richtung zu einer Achsenbewegung in der gleichen Richtung gemäß der Auslenkung führt. Alternativ oder ergänzend dazu können Bewegungen des Bewegungsvorgabemittels 3 auch direkt oder in skalierter Form in eine korrespondierende Bewegung des Industrieroboters 2 umgesetzt werden. Dies ist vergleichbar zu einer Führung des Industrieroboters 2 mit einem virtuell daran befestigten Handgriff.

Das typische Umfeld, diverse Situationen, Problemstellungen und Effekte des gattungsgemäßen Systems werden in den nachfolgenden Absätzen beispielhaft erläutert und zusammengefasst. Derartige Bewegungsvorgabemittel 3 ermöglichen eine sehr einfache und intuitive Positionierung der Achsen bzw. Effektoren von Industrierobotern 2 und ersparen dem Benutzer das Denken und Bedienen in verschiedenen, umschaltbaren Koordinatensystemen. Dies kommt vor allem auch solchen Personen zugute, welche nur gelegentliche oder sehr einfache Einstellvorgänge vorzunehmen haben. Beispielsweise werden vielfach die Roboterbahnen für Montage- oder Lackierarbeiten an Fahrzeugteilen in wesentlichen Teilen bereits vorab und offline mit entsprechender CAD-Software vorberechnet bzw. erstellt, sodass direkt an der Fertigungsstraße nur mehr einfache Justierungen für einige wenige Referenzpunkte vorgenommen werden müssen. Im Zuge eines solchen Steuerungs- bzw. Programmierungsablaufes gibt es Rückkopplungsschleifen, insbesondere eine sensorisches Feedback ausgehend vom Industrieroboter 2 zur Betriebssteuerung bzw. zur Steuervorrichtung 4 des Industrieroboters 2 und auch ein rein visuelles Feedback, welches sich die Bedienperson durch Beobachtung der Bewegungsabläufe des Industrieroboters 2 holt, wie dies in Fig. 1 schematisch veranschaulicht wurde. Diese Rückkopplungen sind zur Erzielung plangemäßer Abläufe von Bedeutung.

Wie vorhergehend bereits angedeutet, kann es zweckmäßig sein, wenn am Bewegungsvorgabemittel 3 eine Sicherheitsschalteinrichtung 5 in Form von wenigstens einem sogenannten Zustimmtaster 6 vorgesehen ist, welcher Zustimmtaster 6 während eines Bedienvorganges gleichzeitig mit einem weiteren Bedienelement 7 zum Auslösen einer potenziell gefahrbringenden Verfahrbewegung zu betätigen ist, um die Verfahrbewegung bzw. die Antriebe freizuschalten. Dazu ist der Zustimmtaster 6 von der Bedienperson aus seiner Ruheposition in eine erste Betätigungsstufe zu überführen und dort während der Verfahrbewegung zu halten. Wird der Zustimmtaster 6, beispielsweise in einer Gefahrensituation, wieder losgelassen, sodass dieser in den unbetätigten Zustand zurückkehrt, oder von der Bedienperson durch krampfhaft verstärktes Zudrücken in eine zweite Betätigungsstufe bzw. in einen zweiten Betätigungszustand übergeführt, so wird die Verfahrbewegung umgehend gestoppt.

Insbesondere dann, wenn die im Bewegungsvorgabemittel 3 eingesetzte Sensorik 8 durch eine sogenannte Inertialsensorik gebildet ist, kann es bei der vom Steuerungssystem 1 ermittelten Orientierung des Bewegungsvorgabemittels 3 im Raum allmählich zu Diskrepanzen zwischen der tatsächlich vorliegende Orientierung und der ermittelten Orientierung kommen. Dies ist insbesondere darauf zurückzuführen, dass Intertialsensoren Beschleunigungskräfte erfassen, also als Beschleunigungsdetektoren fungieren, und basierend auf den detektierten Beschleunigungswerten rechnerisch auf den zurückgelegten Weg bzw. auf die absolvierte Bewegung und/oder Orientierung im Raum Rückschluss gezogen wird. Die zu ermittelnde Orientierungsinformation betreffend das Bewegungsvorgabemittel 3 kann also vom Steuerungssystem 1 bzw. von wenigstens einer ihrer Steuervorrichtungen 4, 4', 4" aus sensorischen Inputs der im Bewegungsvorgabemittel 3 integrierten Sensorik 8 und deren rechnerische Weiterverarbeitung generiert werden. Potentielle Fehler bzw. Ungenauigkeiten in der ermittelten Positions- bzw. Orientierungsinformation beruhen dabei sowohl auf Fehlern in den Sensordaten als auch auf numerischen Fehlern bei der Weiterverarbeitung. Aus den Beschleunigungsdaten der Sensorik 8 im bzw. am Bewegungsvorgabemittel 3 entsprechende Geschwindigkeits-, Positions- und/oder Orientierungsinformationen bezüglich des Bewegungsvorgabemittels 3 zu ermitteln, zählt zum Wissen des im betreffenden Sachgebiet tätigen Fachmannes, weshalb darauf nicht näher eingegangen wird. Darüber hinaus sind die notwendigen Signalverarbeitungen bzw. Rechenoperationen der entsprechenden Literatur in zahlreichen Ausführungen zu entnehmen.

Im Bewegungsvorgabemittel 3 typischerweise eingesetzte Intertialsensoren dienen der Messung translatorischer und rotatorischer Beschleunigungskräfte. Durch Kombination mehrere Intertialsensoren zu einer inertialen Messeinheit (IMU; Inertial Measurement Unit) können die Beschleunigungen in Bezug auf die sechs Freiheiten bzw. Freiheitsgrade gemessen werden. Zweckmäßigerweise ist die Sensorik 8 als inertiale Messeinheit (IMU) ausgeführt, welche üblicherweise Translationssensoren zur Detektierung der linearen Beschleunigung und Drehratensensoren zur Messung der Winkelgeschwindigkeit umfasst. Mittels der Beschleunigungssensoren kann dabei die translatorische Bewegung bzw. Bewegungsänderung berechnet werden, während via die Drehratensensoren die jeweilige Rotationsbewegung des Bewegungsvorgabemittels 3 berechnet werden kann.

Die Translationssensoren und/oder die Drehratensensoren können dabei orthogonal angeordnet sein, sodass sie die jeweiligen Beschleunigungen in Richtung der x- bzw. y- bzw. z-Achse beziehungsweise um die x- bzw. y- bzw. z-Achse erfassen können. Zur Verbesserung der Genauigkeit bzw. um die Drift der genannten Sensoren zu korrigieren, können zusätzlich Magnetfeldsensoren, insbesondere Kompasssensoren, verwendet werden.

Dennoch stellen sich vor allem durch Ungenauigkeiten in der sensorischen Erfassung, aber auch durch die rechnerischen Ermittlungen mit endlicher Genauigkeit mit der Zeit Ungenauigkeiten bzw. Abweichungen in Bezug auf die vom Steuerungssystem 1 technisch bzw. rechnerisch ermittelten Orientierungswerte gegenüber den tatsächlich vorliegenden Orientierungswerten des Bewegungsvorgabemittels 3 in Bezug auf den dreidimensionalen Raum ein.

Um solchen Problemen zu begegnen und negative Auswirkungen zu vermeiden bzw. zu minimieren, ist vorgesehen, dass die vom Steuerungssystem 1 ermittelte Orientierung des Bewegungsvorgabemittels 3 im Raum (i) nach dem Verstreichen einer vordefinierten Zeitspanne oder zu variierenden, vom Steuerungssystem 1 abhängigen Zeitpunkten, oder (ii) beim Erreichen einer vordefinierten, mit dem Bewegungsvorgabemittel 3 zurückgelegten Bewegungstrecke, oder (iii) nach der Ausführung eines die Fehlerwahrscheinlichkeit steigernden oder die Erfassungsgenauigkeit beeinträchtigenden Bewegungsmusters, oder (iv) auf sporadischen Wunsch bzw. aufgrund eines Bedarfes der Bedienperson, insbesondere durch Auslösen eines entsprechenden Kommandos bzw. einer entsprechenden Befehlseingabe, mit einer vordefinierten, im Steuerungssystem 1 hinterlegten oder vom Steuerungssystem 1 abrufbaren Vergleichsorientierung 15 verglichen wird. Im Zuge dieses Vergleichs wird eine eventuell aufgetretene Abweichung zwischen der vom Steuerungssystem 1 technisch bzw. rechnerisch ermittelten Orientierung des Bewegungsvorgabemittels 3 und der vordefinierten Vergleichsorientierung 15 erkennbar bzw. ermittelt. Insbesondere wird der Bedienperson das Ausmaß einer eventuellen Abweichung zwischen der ermittelten Orientierung des Bewegungsvorgabemittels 3 und der Vergleichsorientierung 15 und/oder eine eventuelle Überschreitung und/oder eine Einhaltung eines vorbestimmten Ausmaßes einer Abweichung in Bezug auf die ermittelte Orientierung des Bewegungsvorgabemittels 3 gegenüber der Vergleichsorientierung 15, d.h. gegenüber der tatsächlichen Orientierung des Bewegungsvorgabemittels 3 signalisiert.

Die genannte, zumindest semiautomatisch ablaufende Kontroll- bzw. Überprüfungsmaßnahme ist vor allem dann zweckmäßig, wenn die Orientierung und/oder die fortlaufende Positionsveränderung des Bewegungsvorgabemittels 3 im Raum aus den Signalen von einer im Bewegungsvorgabemittel 3 angeordneten Inertialsensorik zur Detektierung von Beschleunigungen ermittelt bzw. errechnet wird. Für den Fall, dass die Überprüfung bzw. Ermittlung von eventuellen Abweichungen automatisiert erfolgt bzw. überwiegend vom Steuerungssystem 1 initiiert ist, ist es zur Vermeidung von nachteiligen Auswirkungen von Orientierungsfehlern zweckmäßig, physikalisch bzw. technisch bedingte Abdriftungsparameter bzw. Fehlereinflüsse und/oder Echtzeitanforderungen zu berücksichtigen. Eine entsprechende Überprüfung bzw. eine Signalisierung der aktuellen Zustände in Bezug auf eventuelle Orientierungsdiskrepanzen kann typischerweise längstens nach je 5 Minuten mit aktiver Bewegungsvorgabe erfolgen. Vollständig automatisiert durchgeführte Überprüfungen bzw. Vergleiche der Lage- bzw. Orientierungsverhältnisse sollten spätestens nach 30 Sekunden aktiver Bewegungsvorgabe, insbesondere zwischen 0,1 Sekunden und 1 Sekunden, typischerweise nach etwa 0,5 Sekunden aktiver Bewegungsvorgabe erfolgen. Die jeweiligen Zeitspannen können dabei auch variieren, insbesondere im Fall eines Steuerungssystems 1 mit Multitasking-Fähigkeit bzw. einer Priorisierung von Auswertungs- bzw. Steuerungsaufgaben. Das manuelle Auslösen eines Kommandos bzw. einer entsprechenden Befehlseingabe durch die Bedienperson zum Starten einer Vergleichs- bzw. Überprüfungsprozedur kann durch Betätigen eines definierten Eingabemittels am Bewegungsvorgabemittel 3 oder an einer sonstigen Komponente des Steuerungssystems 1 erfolgen.

Entsprechend einer zweckmäßigen Maßnahme ist vorgesehen, dass die Bedienperson auf sporadischen Wunsch oder bei Bedarf und/oder aufgrund automatisierter Einladung oder Aufforderung durch das Steuerungssystem 1, das Bewegungsvorgabemittel 3 entsprechend der vordefinierten Vergleichsorientierung 15 ausrichtet und sodann eine Überprüfung in Bezug auf eine eventuell vorliegende Abweichung der vom Steuerungssystem 1 ermittelten Orientierung gegenüber der Vergleichsorientierung 15 vorgenommen wird.

Entsprechend dem angegebenen Verfahren wird also ausgehend von einer potentiell ungenauen, driftgefährdeten bzw. fehlerbehafteten Ermittlung der Orientierung des Bewegungsvorgabemittels 3 die Abweichung der technisch ermittelten Orientierung in Bezug auf eine vordefinierte, im Steuerungssystem 1 hinterlegte oder vom Steuerungssystem 1 abrufbare Vergleichsorientierung 15 steuerungstechnisch bestimmt, welche Vergleichsorientierung 15 auch der Bedienperson für das Bewegungsvorgabemittel 3 eindeutig bekannt ist. Die Bedienperson kann somit das Bewegungsvorgabemittel 3 entsprechend dieser Vergleichsorientierung 15 ausrichten und kann sodann unter Einbindung des Steuerungssystems 1 die entsprechende Überprüfung bzw. die entsprechende Kontrolle im Sinne eines Orientierungsvergleichs zumindest teilautomatisch ablaufen. Der Bedienperson werden dabei die steuerungstechnisch ermittelten Informationen über das Ausmaß und/oder die Richtung der Abweichung zwischen der technisch bzw. rechnerisch ermittelten Orientierung und der Referenz- bzw. Vergleichsorientierung 15 signalisiert.

Gemäß einer zweckmäßigen Ausgestaltung ist die wenigstens eine, bevorzugt drahtlose, Datenschnittstelle 10 des Bewegungsvorgabemittels 3 zur datentechnischen Kommunikation mit einer Auswertungseinheit im Steuerungssystem 1, welche durch wenigstens eine der Steuervorrichtungen 4, 4' des Steuerungssystems 1 gebildet ist, vorgesehen. Die Datenschnittstelle 10 ist dabei unter anderem auch zum Senden und/oder Empfangen von Informationen oder Daten in Bezug auf ein Auftreten bzw. ein Ausmaß einer eventuell aufgetretenen Abweichung zwischen der ermittelten Orientierung des Bewegungsvorgabemittels 3 und der vordefinierten Vergleichsorientierung 15 ausgebildet. Somit kann diese Ermittlung bzw. Überprüfung der Orientierung, welche erhöhte Anforderungen an die Rechenleistung stellt, auch gänzlich oder teilweise von externen Auswertungs- bzw. Steuervorrichtungen 4, 4' übernommen werden.

Entsprechend einer praktikablen Ausführung kann vorgesehen sein, dass der Bedienperson eine Über- und/oder eine Unterschreitung von wenigstens einem festgelegten Grenzwert für die Orientierungsabweichung signalisiert wird. Während also der Bedienperson zumindest Überschreitungen eines vordefinierten Grenzwertes mitgeteilt werden, kann zusätzlich oder alternativ dazu vorgesehen sein, die Einhaltung eines Grenzwertes bzw. eines definierten Toleranzbereiches zu signalisieren, also gute Voraussetzungen für eine möglichst exakte bzw. wunschgemäße Bedienhandlung mitzuteilen.

Gemäß einer vorteilhaften Weiterbildung kann auch vorgesehen sein, dass die Signalisierung von absoluten oder tolerierbaren Übereinstimmungen und/oder die Signalisierung von potentiell aufgetretenen Orientierungsabweichungen nur bedarfsweise, insbesondere nach Aktivierung oder Anforderung durch die Bedienperson erfolgt. Hierfür sind in dem mittels Software programmierbaren Steuerungssystem 1 und/oder Bewegungsvorgabemittel 3 entsprechende Dialoge bzw. Mensch-Maschine-Schnittstellen vorgesehen.

Die Signalisierung, welche mittels optisch, akustisch und/oder taktil wahrnehmbarer Ausgabemittel 16 umgesetzt werden kann, erfolgt bevorzugt direkt am Bewegungsvorgabemittel 3. Vorzugsweise ist am Bewegungsvorgabemittel 3 wenigstens ein optisches bzw. visuell wahrnehmbares Ausgabemittel 16 vorgesehen, beispielsweise ein grafisches Display 17 und/oder ein Leuchtmittel, mit welchem Abweichungen und/oder Übereinstimmungen zwischen der technisch ermittelten Orientierung und der Vergleichsorientierung 15 signalisiert bzw. angezeigt werden können. Zweckmäßig ist es also, wenn die Signalisierung einer Abweichung und/oder einer ausreichenden Übereinstimmung durch zumindest ein am Bewegungsvorgabemittel 3 ausgebildetes Ausgabemittel 16, ausgewählt aus der Gruppe grafisches Display 17, LED, akustisches Ausgabeelement und Vibrationsgenerator, erfolgt. Alternativ oder in Kombination dazu kann auch ein externes bzw. peripheres Ausgabemittel, insbesondere ein Bildschirm, ausgebildet sein, welches Ausgabemittel im Bereich des Industrieroboters 2 bzw. im allgemeinen Blickfeld der Bedienperson angeordnet und unter anderem zur Signalisierung der entsprechenden Überprüfungsergebnisse vorgesehen ist.

Die Signalisierung von Orientierungsabweichungen kann dabei Informationen in Bezug auf den Betrag bzw. das Ausmaß der Abweichung und/oder in Bezug auf die Richtung der Abweichung umfassen. Die Bedienperson kann somit die signalisierten Informationen im Hinblick auf die ihr bekannte, tatsächliche Orientierung des Bewegungsvorgabemittels 3, welche mit Vergleichsorientierung 15 übereinstimmt, in Bezug auf die technisch ermittelte Orientierung plausibilisieren bzw. evaluieren und gegebenenfalls Korrekturmaßnahmen einleiten, insbesondere eine Neukalibrierung in Bezug auf die Ausgangs- bzw. Folgewerte des Steuerungssystem 1 vornehmen bzw. einen Abgleich veranlassen.

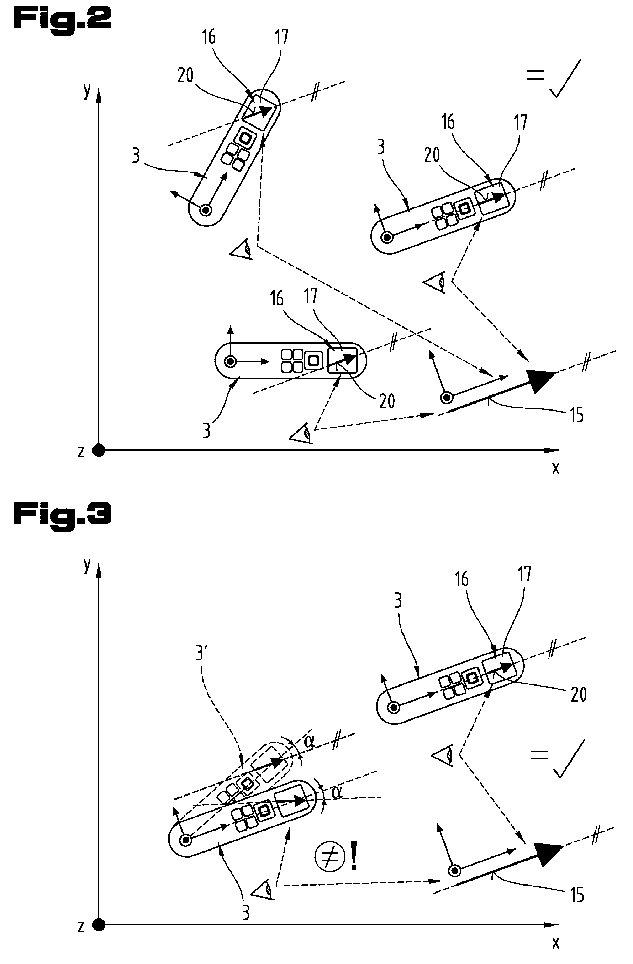

Entsprechend einer zweckmäßigen Ausführungsform wird der Bedienperson das Ausmaß der Abweichung und/oder die Richtung der Abweichung in Bezug auf wenigstens eine Körperachse, insbesondere in Bezug auf die Längsachse des Bewegungsvorgabemittels 3 signalisiert. Gemäß einer vorteilhaften Ausgestaltung ist vorgesehen, dass eine ermittelte Abweichung durch ein von der Bedienperson visuell wahrnehmbares Signal, insbesondere durch ein Signallicht, oder durch ein veränderliches grafisches Symbol, insbesondere in Art einer Kompassnadel, eines Fadenkreuzes, eines Pfeils 20 - siehe beispielsweise Fig. 2, 3 - und/oder in Art eines künstlichen Horizonts dargestellt wird. Insbesondere kann am Gehäuse des Bewegungsvorgabemittels 3 oder auf dessen Display 17, welches vorzugsweise grafikfähig ist, wenigstens eine Referenzmarkierung oder Richtungsmarkierung vorgesehen sein, auf welche sich die vom Steuerungssystem 1 ermittelte Richtungsinformation bezieht.

Zweckmäßig ist es auch, wenn eine Charakteristik der Signalisierung von Orientierungsabweichungen, insbesondere eine Signalintensität, Lautstärke, Frequenz, Farbdarstellung, ein Anzeigewert oder eine Symbolform, korrespondierend zum Betrag einer Kenngröße für die jeweilige Orientierungsabweichung über wenigstens ein Ausgabemittel 16, welches bevorzugt am Bewegungsvorgabemittel 3 oder an einer anderen Stelle im Steuerungssystem 1 ausgebildet ist, variierend ausgegeben wird. Weiters kann vorgesehen sein, dass eine Über- und/oder eine Unterschreitung eines festgelegten Grenzwertes für eine Orientierungsabweichung durch wenigstens ein transientes Signal eines Ausgabemittels 16, insbesondere durch Aufblinken eines optischen Signalisierungsmittels, durch ein kurzes akustisches Signal, oder durch einen taktil wahrnehmbaren, mechanischen Impuls signalisiert wird.

Durch das angegebene Verfahren wird der Bedienperson die Möglichkeit geboten, auf eine gefahrlose Weise, d.h. ohne Verfahrbewegung bzw. ohne einer probeweisen Durchführung einer tatsächlichen Verfahrbewegung am Industrieroboter 2, die Zuverlässigkeit bzw. das aktuelle Fehlerausmaß der technischen Orientierungsbestimmung des Bewegungsvorgabemittels 3 zu überprüfen. Ein möglicherweise vorhandener Fehler bzw. eine potentielle Ungenauigkeit in den technisch ermittelten Orientierungsinformationen wird bei der Bestimmung der Abweichung gegenüber der Vergleichsorientierung 15 ermittelt und wird in den diesbezüglich signalisierten Informationen entsprechend repräsentiert.

Durch den entsprechenden, zumindest teilautomatisiert ausgeführten Orientierungsvergleich und die Signalisierung des Ergebnisses erhält die Bedienperson, welche die tatsächliche Orientierung in Bezug auf die ihr ebenfalls bekannte Vergleichsorientierung 15 kennt, eine Möglichkeit, die signalisierten Informationen zu plausibilisieren und damit die Zuverlässigkeit bzw. die aktuelle Genauigkeit oder die momentan vorliegenden Abweichungen betreffend die technisch ermittelten Orientierungsinformationen zu überprüfen.

Wie in Fig. 1 schematisch dargestellt wurde, ist also für das Steuerungssystem 1 bzw. innerhalb des Steuerungssystems 1 eine der Bedienperson bekannte oder für die Bedienperson erkennbare Vergleichsorientierung 15 festgelegt. Diese Vergleichsorientierung 15 kann gemäß einer einfachen Ausführungsform durch eine sichtbare Markierung, beispielsweise durch einen Orientierungspfeil 18 repräsentiert sein und dementsprechend für die Bedienperson erkennbar bzw. festgelegt sein. Als Vergleichsorientierung 15 können aber auch sonstige, einfach erkennbare Orientierungen, wie z.B. Orientierungen von im Umfeld befindlichen Objekten, wie etwa von Gebäuden oder auch augenscheinlich erkennbare Maschinenausrichtungen, genutzt werden.

Im dargestellten Ausführungsbeispiel verläuft die Vergleichsorientierung 15 innerhalb der oder parallel zur xy-Ebene eines 3D-Koordinatensystems und in Richtung der y-Achse dieses 3D-Koordinatensystems. Beispielsgemäß und zweckmäßigerweise, jedoch nicht zwingend, ist die xy-Ebene horizontal definiert. Die Vergleichsorientierung 15 ist dabei nicht nur durch eine einfache Richtungsangabe in einem Weltkoordinatensystem 19 des Industrieroboters 2, wie etwa durch einen einzelnen Vektor, festgelegt, sondern durch die Orientierung bzw. Ausrichtung eines Koordinatensystems bzw. durch jede geeignete Angabe, welche die Orientierung eines Koordinatensystems relativ zu einem Bezugssystem vollständig bestimmt, wie beispielsweise eine Dreh- bzw. Rotationsmatrix mit drei Freiheitsgraden. Im Rahmen der dargestellten Erfindung spielt die Position des Orientierungspfeils 18 bzw. der Koordinatenursprung des beschreibenden polaren oder kartesischen Koordinatensystems keine Rolle, sondern nur dessen Verdrehung gegenüber dem Bezugssystem, d.h. gegenüber dem Weltkoordinatensystem 19 des Industrieroboters 2, welches Weltkoordinatensystem 19 in der Steuervorrichtung 4 des Industrieroboters 2 definierbar bzw. hinterlegt ist. Auch das dreidimensionale Weltkoordinatensystem 19 des Industrieroboters 2 kann dabei als kartesisches oder polares Koordinatensystem zur Definition von Orientierungen und/oder Punkten in Räumen geführt werden.

Fig. 2 zeigt verschiedene Beispiele betreffend die Anzeige einer Richtungsinformation in Bezug zur Vergleichsorientierung 15 bei unterschiedlichen Ausrichtungen des Bewegungsvorgabemittels 3 in Bezug auf die Vergleichsorientierung 15 bei idealer, d.h. fehlerfreier steuerungstechnischer Ermittlung der Orientierung des Bewegungsvorgabemittels 3 für drei verschiedene Ausrichtungen des Bewegungsvorgabemittels 3. Die bekannte Lage der Vergleichsorientierung 15, welche beispielhaft als dicker Pfeil im rechten unteren Abschnitt der Zeichnung dargestellt wurde, wird korrekt bzw. auf das gerätefeste Bezugssystem des Bewegungsvorgabemittels 3 in der jeweiligen Ausrichtung umgerechnet und derart am Ausgabemittel 16, insbesondere an einem grafischen Display 17 dargestellt, dass für die Bedienperson eine Übereinstimmung feststellbar ist.

Insbesondere ist für die Bedienperson durch visuelle Evaluierung erkennbar, dass die am Ausgabemittel 16 angezeigte Richtungsinformation, beispielsweise in Form eines Pfeiles 20, mit der Vergleichsorientierung 15 übereinstimmt. So bleibt bei jedem der drei dargestellten Fälle, in welchen unterschiedliche Orientierungen des Bewegungsvorgabemittels 3 vorliegen, die am Bewegungsvorgabemittel 3 angezeigte Richtungsinformation in Übereinstimmung bzw. in paralleler Ausrichtung zur vordefinierten Referenz- bzw. Vergleichsorientierung 15, wodurch die Bedienperson mit dem Bewegungsvorgabemittel 3 davon ausgehen kann, dass die vom Steuerungssystem 1, insbesondere von wenigstens einer der implementierten Steuervorrichtungen 4, 4', 4" - Fig. 1 -, technisch bzw. rechnerisch ermittelte Orientierung des Bewegungsvorgabemittels 3 mit den tatsächlichen Gegebenheiten bzw. Orientierungen übereinstimmt. Die technischen Ermittlungen bzw. Berechnungen von Seiten des Steuerungssystems 1 in Bezug auf die wechselnden Orientierungen des händisch geführten Bewegungsvorgabemittels 3 sind somit adäquat bzw. korrekt und ausreichend genau bzw. zuverlässig. Im Rahmen der gegenständlichen Erfindung ist es dabei belanglos, von welcher bzw. durch wie viele Steuervorrichtungen 4, 4', 4" die jeweiligen Orientierungsinformationen und gegebenenfalls Positionsinformationen in Bezug auf das händisch geführte Bewegungsvorgabemittel 3 ermittelt werden.

Gemäß der Ausführungsform nach Fig. 2 sind also für die Bedienperson korrekte, steuerungstechnische Ermittlungsvorgänge erkennbar, wenn die entsprechende Signalisierung am Bewegungsvorgabemittel 3, welche beispielsgemäß mittels eines die jeweils ermittelte Richtung anzeigenden Pfeils 20 realisiert ist, eine zur vordefinierten Vergleichsorientierung 15 übereinstimmende bzw. parallel verlaufende Richtungs- bzw. Orientierungsinformation repräsentiert. Bei der Ausführungsform gemäß Fig. 2 wird also die steuerungstechnisch ermittelte, gegebenenfalls ungenaue oder fehlerhafte Information betreffend die vermeintliche Orientierung in Bezug auf die Vergleichsorientierung 15 am Ausgabemittel 16 signalisiert. Die Bedienperson kann daraufhin in einfacher Art und Weise kontrollieren, ob die technische ermittelte Orientierungsinformation gemäß der Signalisierung am Ausgabemittel 16 mit der vordefinierten Vergleichsorientierung 15, welche als sichtbare Markierung im Umfeld der Bedienperson ausgeführt sein kann, übereinstimmt, weitgehend übereinstimmt oder stark bzw. grenzwertüberschreitend davon abweicht.

Fig. 3 zeigt ein Beispiel für die Auswirkung einer fehlerbehafteten technischen Erfassung der Orientierung des Bewegungsvorgabemittels 3. Dabei kommt es zu einer für die Bedienperson erkennbaren Abweichung zwischen der am Ausgabemittel 16, insbesondere der am Display 17 des Bewegungsvorgabemittels 3 dargestellten Richtungsinformation und der vordefinierten Vergleichsorientierung 15. Aufgrund der fehlerbehafteten Ermittlung der Orientierung geht das Steuerungssystem 1 von einer Ausrichtung des Bewegungsvorgabemittels 3 aus, die der strichlierten Darstellung des Bewegungsvorgabemittels 3' in Fig. 3 entspricht, während die tatsächlich vorliegende Ausrichtung dem in vollen Linien gezeichneten Bewegungsvorgabemittel 3 entspricht. Die Darstellung der Richtungsinformation am Display 17 erfolgt dabei also für die fehlerbehaftete Orientierungsinformation und steht damit in einer für die Bedienperson erkennbaren Diskrepanz zur Vergleichsorientierung 15, wodurch für die Bedienperson erkennbar ist, dass die tatsächlich eingenommene Orientierung des Bewegungsvorgabemittels 3 vom Steuerungssystem 1 fehlerhaft bzw. unpräzise ermittelt wurde. Insbesondere liegt bei der linken Darstellung in Fig. 3 eine Winkelabweichung α (Alpha) zwischen der technisch ermittelten Orientierung und der fix vordefinierten Referenz- bzw. Vergleichsorientierung 15 vor. Die Bedienperson kann sodann evaluieren und entscheiden, ob das Ausmaß des Fehlers noch tolerierbar ist, oder ob eine erneute Kalibrierung zweckmäßig ist.

Beim rechts dargestellten Fallbeispiel in Fig. 3 signalisiert die am Ausgabemittel 16 ausgegebene, steuerungstechnisch ermittelte Orientierungsinformation, beispielsgemäß ein Pfeil 20 mit entsprechender Richtung bzw. Orientierung, eine Übereinstimmung mit der vordefinierten Vergleichsorientierung 15. Die Bedienperson kann daraus Korrektheit bzw. eine ausreichende Exaktheit der aktuellen steuerungstechnischen Ermittlungen betreffend die wechselnden Orientierungen des Bewegungsvorgabemittels 3 ableiten.

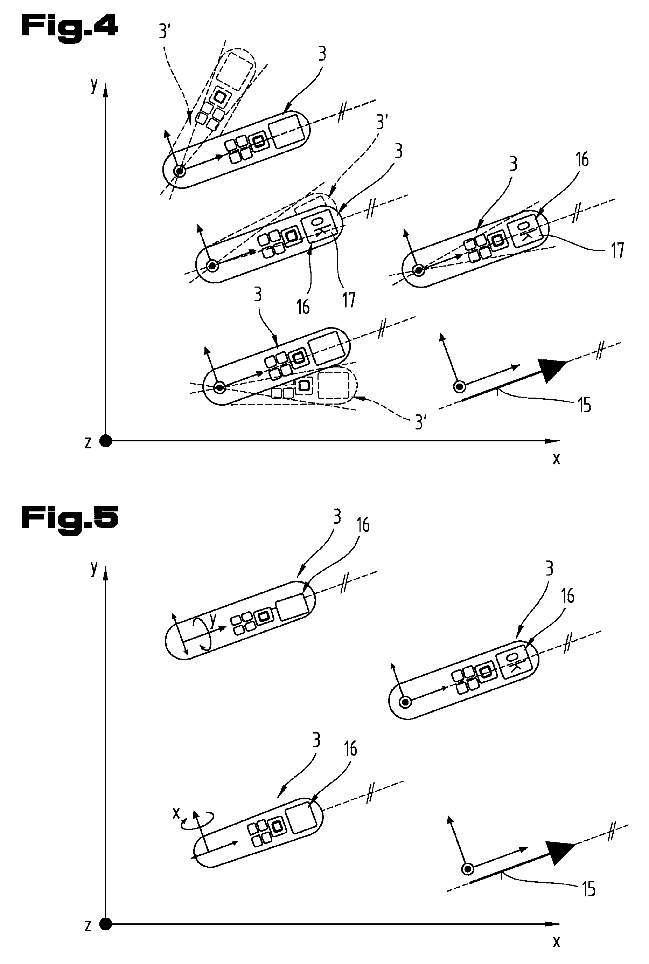

Fig. 4 zeigt mehrere Beispiele für die Anzeige des Ergebnisses einer Grenzwertprüfung für die Abweichung der technisch ermittelten Orientierung des Bewegungsvorgabemittels 3 gegenüber der Vergleichsorientierung 15 bei unterschiedlich stark ausgeprägtem Fehler der technisch erfassten Orientierung des Bewegungsvorgabemittels 3. Die fehlerbehaftete Orientierungsinformation ist in der Figur als fiktive Orientierung der strichliert gezeichneten Bewegungsvorgabemittel 3' dargestellt, wohingegen die tatsächlich vorliegende Ausrichtung des Bewegungsvorgabemittels 3 der Vergleichsorientierung 15 entspricht, welche von der Bedienperson für Prüf- bzw. Kontrollzwecke mit dem Bewegungsvorgabemittel 3 vorübergehend eingenommen wird.

Zur Erzielung einer ungestörten Handhabung des Bewegungsvorgabemittels 3 ist gemäß einer zweckmäßigen Ausgestaltung vorgesehen, eine Grenze bzw. wenigstens einen Grenzwert für den maximal vertretbaren Orientierungsfehler festzulegen. In Fig. 4 ist als Grenzbedingung eine maximal tolerierte bzw. akzeptierbare Verdrehung um die z-Achse eingezeichnet, hier beispielsweise eine Verdrehung um +/- 10° gegenüber der Vergleichsorientierung 15. Solange die technisch ermittelte Orientierung des Bewegungsvorgabemittels 3 innerhalb des zulässigen Toleranzbandes zur Vergleichsorientierung 15 liegt, wird im Sinne einer positiven Rückmeldung beispielsweise die Signalisierung "ok" an die Bedienperson ausgegeben. Unter der Voraussetzung, dass die Bedienperson während des Überprüfungsvorganges das Bewegungsvorgabemittel 3 ordnungsgemäß entsprechend der Vergleichsorientierung 15 ausrichtet, liefert das Ausgabemittel 16, insbesondere das Display 17 eine unmittelbare Information über die ausreichende oder nicht ausreichende Genauigkeit der technisch, insbesondere der sensorisch und rechnerisch ermittelten Orientierungsinformation. Bei den in Fig. 4 ganz oben und ganz unten dargestellten Fallbeispielen für Orientierungsvergleiche, weichen die technisch ermittelten Orientierungsinformationen in Bezug auf die Bewegungsvorgabemittel 3' - strichliert dargestellt - zu stark von den tatsächlich vorliegenden Orientierungen der Bewegungsvorgabemittel 3 ab. Insbesondere liegen dabei die technisch ermittelten Orientierungsinformationen
- mit strichlierten Linien symbolisiert - außerhalb eines vordefinierten Toleranzbandes bzw. Winkelbereichs gegenüber der Vergleichsorientierung 15. Die Signalisierung am Ausgabemittel 16 kann in diesem Fall eine ausbleibende Rückmeldung oder eine negative Rückmeldung, beispielsweise "not ok", "stop", "!" oder dgl. sein. Bei den in der Bildmitte von Fig. 4 dargestellten Fallbeispielen liegt die technisch ermittelte Orientierung - strichliert veranschaulicht
- in Bezug auf die tatsächlich vorliegende Orientierung - in vollen Linien dargestellt - innerhalb eines vordefinierten, zugelassenen Toleranzbereiches bzw. stimmen dabei die steuerungstechnische Ermittlung und die Ist-Orientierung exakt überein, sodass jeweils eine positive Signalisierung vorliegt, insbesondere ein "ok" am Ausgabemittel 16 aufscheint.

Fig. 5 veranschaulicht, dass die Auswertung der Orientierungsabweichung nicht nur Verdrehungen bzw. Orientierungsfehler um die Hochachse bzw. z-Achse, sondern ebenso um die Quer- und Längsachse, also um die x- und y-Achse einschließt. Insbesondere liegt bei dem in Fig. 5 links oben dargestellten Fallbeispiel eine Verdrehung des Bewegungsvorgabemittels 3 um seine Längsachse vor, während bei dem links unten dargestellten Fallbeispiel eine Winkelabweichung um die Querachse vorliegt. Insbesondere stimmen bei den in der linken Hälfte von Fig. 5 dargestellten Beispielen die technisch ermittelten Orientierungen bezüglich des Bewegungsvorgabemittels 3 nicht mit der Referenz- bzw. Vergleichsorientierung 15 überein, sodass das Ausgabemittel 16 am Bewegungsvorgabemittel 3 mangelnde Übereinstimmung signalisiert bzw. die Bedienperson auf eine fehlerbehafte Orientierungsermittlung hinweist. Die Abweichungen zwischen der errechneten Orientierung und der tatsächlichen Orientierung, welche in diesen Fällen der Vergleichsorientierung 15 entspricht, werden hierbei durch eine negative bzw. fehlende Rückmeldung am Ausgabemittel 16 signalisiert. Bei dem in Fig. 5 rechts dargestellten Fallbeispiel ist das Bewegungsvorgabemittel 3 entsprechend der Vergleichsorientierung 15 ausgerichtet, dessen Orientierung im Raum deckt sich also mit der vordefinierten Vergleichsorientierung 15, wodurch im Zuge eines beispielsweise von der Bedienperson eingeleiteten Prüf- bzw. Kontrollvorganges am Ausgabemittel 16 eine positive Signalisierung erfolgt, beispielsweise ein "ok" ausgegeben wird.

Entsprechend einer zweckmäßigen Ausführungsform, wird also die Orientierung des Bewegungsvorgabemittels 3 im Raum, beispielsweise in Bezug auf ein orthogonales, kartesisches Koordinatensystem ermittelt und gegenüber der dreidimensional festgelegten Vergleichsorientierung 15 auf Übereinstimmung bzw. Abweichung überprüft. Insbesondere kann in Bezug auf ein dreidimensionales Koordinatensystem vorgesehen sein, die Orientierung des Bewegungsvorgabemittels 3 in Bezug auf die xy-Ebene, die xz-Ebene und die yz-Ebene zu ermitteln. Analog dazu ist die Vergleichsorientierung 15 räumlich festzulegen bzw. zu definieren. Anstelle der Verwendung von kartesischen Koordinaten, ist es selbstverständlich auch möglich, die Orientierung des Bewegungsvorgabemittels 3 im Raum bzw. die Vergleichsorientierung 15 durch polare Koordinaten zu beschreiben.

Entsprechend einer Weiterbildung kann vorgesehen sein, eine Überprüfung bzw. Auswertung und Signalisierung von Abweichungen oder Übereinstimmungen der Orientierungen in Bezug auf drei orthogonale Ebenen des Raumes vorzunehmen. Insbesondere kann eine Signalisierung von Orientierungsabweichungen bzw. Orientierungsübereinstimmungen in Bezug auf die xy-Ebene, die xz-Ebene und die yz-Ebene vorgenommen werden. Jedes Auswertungs- bzw. Überprüfungsergebnis kann dabei individuell signalisiert bzw. angezeigt werden. Diese Signalisierung kann dabei simultan erfolgen, d.h. über drei Anzeigeabschnitte am Ausgabemittel 16 oder über drei separate Ausgabemittel 16, wie z.B. LEDs. Alternativ ist es auch möglich, die entsprechenden Orientierungsinformationen am Ausgabemittel 16 sequentiell auszugeben und dabei den jeweiligen Ebenen eindeutig zuzuweisen. Zweckmäßigerweise wird jedoch eine Neukalibrierung des Steuerungssystems 1 vorgenommen, sobald gegenüber nur einer der drei den Raum definierenden Ebenen eine zu große Abweichung zwischen der vom Steuerungssystem 1 technisch ermittelten Orientierung und der Vergleichsorientierung 15 vorliegt. Insofern hat eine Aufsplittung des Ergebnisses der Orientierungsüberprüfung auf drei Bezugsebenen lediglich informativen Charakter für die Bedienperson.

Gemäß einer praktikablen Ausführungsform ist die Vergleichsorientierung 15 durch zumindest eine vordefiniert festgelegte Koordinatenachse, insbesondere durch die x-, y- oder z-Achse des Weltkoordinatensystems 19 des Industrieroboters 2 mitbestimmt. Die Vergleichsorientierung 15 kann aber auch durch die Orientierung einer positionsveränderlichen Achse des Industrieroboters 2 festgelegt sein. Beispielsweise kann hierfür eine vordefinierte bzw. im Vorfeld bestimmte Gelenks-, Arm-, Werkzeug-, oder Spindelachse des Industrieroboters 2 genutzt werden. Durch parallele bzw. richtungsgleiche Ausrichtung zwischen dem bevorzugt länglich ausgeführten Bewegungsvorgabemittel 3 und der vordefinierten Achse des Bewegungsvorgabemittels kann dann ebenso ein Vergleich zwischen den technischen Ermittlungsergebnissen von Seiten des Steuerungssystems 1 in Bezug auf die Orientierung des Bewegungsvorgabemittels 3 und der via die Bedienperson entsprechend eingenommenen, roboterbezogenen Vergleichsorientierung 15 vorgenommen werden. Nachdem im Steuerungssystem 1 bzw. in der Steuervorrichtung 4 des Industrieroboters 2 - Fig. 1 - stets die aktuelle Position bzw. Orientierung der entsprechenden Achsen bzw. der Vergleichsachse des Industrieroboters 2 vorliegt, kann dieser Vergleich ebenso rasch und zuverlässig vorgenommen werden. Hierbei liegt quasi eine wechselnde bzw. variable Vergleichsorientierung 15 vor, welche von der Position bzw. Orientierung der entsprechenden Achse des Industrieroboters 2 abhängig ist. Eine bezüglich der Orientierung starr vordefinierte Vergleichsorientierung 15 ist also nicht zwingend erforderlich. Je nach Zugänglichkeit bzw. Einsehbarkeit der positionsveränderlichen Achse bzw. Vergleichsachse des Industrieroboters 2 kann erhöhte Praktikabilität in Bezug auf die Überprüfung und Signalisierung von potentiell auftretenden Orientierungsabweichungen erzielt werden.

Alternativ oder in Kombination zur vorhergehend beschriebenen Ausführung ist es auch möglich, dass die Vergleichsorientierung 15 durch die vordefinierte Orientierung einer Kalibrierposition oder einer Kalibriereinrichtung für eine initiale oder eine während des Betriebs periodisch zu nutzende Referenzierung zwischen der Orientierung des Bewegungsvorgabemittels 3 und den Ausgangswerten des Steuerungssystems 1 bezüglich der Orientierung des Bewegungsvorgabemittels 3 festgelegt ist. Eine solche Kalibriereinrichtung kann durch eine definierte Ablage bzw. Aufnahme für die das Bewegungsvorgabemittel 3 gebildet sein. Beispielsweise kann hierfür eine Aufnahmenut, eine Aufnahmebohrung, eine Ablageschale oder eine sonstige Aufnahme bzw. Halterung vorgesehen sein, durch welche das Bewegungsvorgabemittel 3 definiert orientiert bzw. ausgerichtet wird, um sodann einen Vergleich zwischen dieser Vergleichsorientierung 15 und der technisch ermittelten Orientierung vornehmen zu können. Die Kalibriereinrichtung kann dabei ein voll- oder semiautomatisches Erfassungsmittel für das Bewegungsvorgabemittel 3 umfassen. Alternativ oder in Kombination dazu ist es aber auch möglich, durch eine aktive Signalisierung bzw. Quittierung von Seiten der Bedienperson, insbesondere durch Betätigung eines Eingabemittels am Bewegungsvorgabemittel 3, beispielsweise durch einen Tastendruck, dem Steuerungssystem 1 mitzuteilen, dass sich das Bewegungsvorgabemittel an der Kalibierposition befindet bzw. in der Vergleichsorientierung 15 vorliegt.

Zweckmäßig kann es auch sein, dass festgestellte Abweichungen zwischen der vom Steuerungssystem 1 ermittelten Orientierung des Bewegungsvorgabemittels 3 und der Vergleichsorientierung 15 nach aktiver Quittierung durch die Bedienperson für die fortgesetzte Korrektur der vom Steuerungssystem 1 ermittelten Orientierung verwendet werden und somit die Abweichungen egalisiert oder annulliert werden. Eine solche Quittierung erfolgt bevorzugt ebenso über wenigstens ein am Bewegungsvorgabemittel 3 ausgeführtes Eingabemittel, insbesondere mittels eines Schaltelementes bzw. Tasters.

Aus Sicherheitsgründen kann es dabei zweckmäßig sein, eine solche Quittierung bzw. Annullierung der Abweichung nur dann zuzulassen, wenn die jeweilige Abweichung ein bestimmtes festgelegtes Ausmaß nicht überschreitet. Somit können dann kleinere Abweichungen noch bequem "aus der Hand" korrigiert werden. Unverhältnismäßig große Abweichungen hingegen, welche möglicherweise auf einem Irrtum der Bedienperson im Hinblick auf die tatsächliche Vergleichsorientierung oder auf einer Fehlbedienung basieren, werden aber nicht für fälschliche Korrekturmaßnahmen herangezogen. In solchen Fällen, oder wenn die Abweichung tatsächlich ein entsprechend großes Ausmaß angenommen hat, ist dann vorzugsweise eine erneute Kalibrierung an einer eigens dafür vorgesehenen Kalibrierposition bzw. Kalibiervorrichtung vorzunehmen, um die Abweichungen zu annullieren.

Ebenfalls aus Sicherheitsgründen kann es zweckmäßig sein, dass sobald eine festgestellte Abweichung ein gewisses festgelegtes Ausmaß überschreitet, die weitere Abgabe von Verfahrkommandos bzw. Steuerbefehlen mittels dem Bewegungsvorgabemittel 3 steuerungstechnisch, insbesondere durch das Steuerungssystem 1 oder durch das Bewegungsvorgabemittel 3, gesperrt wird. Diese Sperre kann solange aktiv sein, bis durch den Benutzer eine geeignete Maßnahme zur Korrektur der Abweichung getroffen wird, was beispielsweise durch eine Quittierung zur Annullierung oder anhand Durchführung einer Kalibrierung an einer dafür vorgesehenen Kalibrierposition bzw. Kalibiervorrichtung erfolgen kann.

Die vorhergehend beschriebenen Maßnahmen bzw. Verfahrensweisen sind im Steuerungssystem 1 bzw. im Bewegungsvorgabemittel 3 abgebildet bzw. mittels dieser Vorrichtungen ausführbar. Insbesondere sind die Funktionen und die Verhaltensweisen des Steuerungssystems 1 bzw. des Bewegungsvorgabemittels 3 zum Großteil durch softwaregesteuerte, elektronische Komponenten bestimmt. Die entsprechende Umsetzung der erfindungsgemäßen Maßnahmen durch softwaretechnische Mittel ist dem Fachmann geläufig und kann unter Beiziehung von standardmäßig verfügbaren elektronischen Komponenten in Verbindung mit üblichen Ein- und Ausgabemitteln erfolgen.

Der Ordnung halber sei abschließend darauf hingewiesen, dass zum besseren Verständnis des angegebenen Überprüfungsverfahrens bzw. des Aufbaus des Steuerungssystems 1 und des Bewegungsvorgabemittels 3 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen, in Zusammenhang mit den Fig. 1-5 beschriebenen Maßnahmen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Steuerungssystem
- 2: Industrieroboter
- 3: Bewegungsvorgabemittel
- 4, 4', 4": Steuervorrichtung
- 5: Sicherheitsschalteinrichtung

- 6: Zustimmtaster
- 7: Bedienelement
- 8: Sensorik
- 9: Sensorik
- 10: Datenschnittstelle

- 11: Datenschnittstelle
- 12: Datenverbindung
- 13: Datenverbindung
- 14: Datenverbindung
- 15: Vergleichsorientierung

- 16: Ausgabemittel
- 17: Display
- 18: Orientierungspfeil
- 19: Weltkoordinatensystem
- 20: Pfeil

## Patentansprüche

1. Verfahren zum Programmieren oder Vorgeben von Bewegungen oder Abläufen eines Industrieroboters (2), wobei über ein händisch zu führendes Bewegungsvorgabemittel (3) mit integrierter und/oder externer Sensorik (8; 9) zur Ermittlung der Orientierung und gegebenenfalls der Position des händisch zu führenden Bewegungsvorgabemittels (3) im Raum von einem Steuerungssystem (1) zumindest ein Teil der Daten für die Bewegungssteuerung oder Ablaufprogrammierung des Industrieroboters (2) errechnet und generiert wird, und wobei die vom Steuerungssystem (1) ermittelte Orientierung des Bewegungsvorgabemittels (3) im Raum mit einer vordefinierten, im Steuerungssystem (1) hinterlegten oder vom Steuerungssystem (1) abrufbaren Vergleichsorientierung (15) verglichen wird, **dadurch gekennzeichnet, dass** der Vergleich
(i) nach dem Verstreichen einer vordefinierten Zeitspanne oder zu variierenden, vom Steuerungssystem (1) abhängigen Zeitpunkten, oder
(ii) beim Erreichen einer vordefinierten, mit dem Bewegungsvorgabemittel (3) zurückgelegten Bewegungstrecke, oder
(iii) nach der Ausführung eines die Fehlerwahrscheinlichkeit steigernden oder die Erfassungsgenauigkeit beeinträchtigenden Bewegungsmusters, oder
(iv) auf sporadischen Wunsch und nach entsprechender Befehlseingabe durch die Bedienperson
durchgeführt wird, und dass der Bedienperson das Ausmaß einer Abweichung zwischen der ermittelten Orientierung des Bewegungsvorgabemittels (3) und der Vergleichsorientierung (15) und/oder eine Überschreitung und/oder eine Einhaltung eines vorbestimmten Ausmaßes einer Abweichung zwischen der ermittelten Orientierung des Bewegungsvorgabemittels (3) und der Vergleichsorientierung (15) signalisiert wird.

2. Verfahren nach Anspruch 1, **dadurch gekennzeichnet, dass** die Orientierung und gegebenenfalls die fortlaufende Positionsveränderung des Bewegungsvorgabemittels (3) im Raum aus den Sensorsignalen von einer im Bewegungsvorgabemittel (3) angeordneten Inertialsensorik ermittelt wird.

3. Verfahren nach Anspruch 1 oder 2, **dadurch gekennzeichnet, dass** die Bedienperson auf sporadischen Wunsch oder bei Bedarf und/oder aufgrund automatisierter Einladung oder Aufforderung durch das Steuerungssystem (1), das Bewegungsvorgabemittel (3) entsprechend der vordefinierten Vergleichsorientierung (15) manuell ausrichtet und sodann eine Überprüfung in Bezug auf eine eventuell vorliegende Abweichung der vom Steuerungssystem (1) ermittelten Orientierung gegenüber der Vergleichsorientierung (15) vorgenommen wird.

4. Verfahren nach einem der vorhergehenden Ansprüche, **dadurch gekennzeichnet, dass** der Bedienperson das Ausmaß und/oder die Richtung der Orientierungsabweichung signalisiert wird.

5. Verfahren nach einem der vorhergehenden Ansprüche, **dadurch gekennzeichnet, dass** der Bedienperson eine Über- und/oder Unterschreitung von wenigstens einem festgelegten Grenzwert für die Orientierungsabweichung signalisiert wird.

6. Verfahren nach einem der vorhergehenden Ansprüche, **dadurch gekennzeichnet, dass** die Signalisierung von potentiell aufgetretenen Orientierungsabweichungen nur bedarfsweise, insbesondere nach Aktivierung oder Anforderung durch eine Bedienperson, vorgenommen wird, wobei die Signalisierung gegebenenfalls in Bezug auf wenigstens eine Körperachse des Bewegungsvorgabemittels (3) erfolgt.

7. Verfahren nach einem der vorhergehenden Ansprüche, **dadurch gekennzeichnet, dass** die Signalisierung einer Abweichung und/oder einer ausreichenden Übereinstimmung durch zumindest ein am Bewegungsvorgabemittel (3) ausgebildetes Ausgabemittel (16), ausgewählt aus der Gruppe grafische Display (17), LED, akustisches Ausgabeelement, Vibrationsgenerator, erfolgt.

8. Verfahren nach einem der vorhergehenden Ansprüche, **dadurch gekennzeichnet, dass** eine ermittelte Abweichung durch ein von der Bedienperson visuell wahrnehmbares Signal, insbesondere durch ein Signallicht, oder durch ein veränderliches grafisches Symbol, insbesondere in Art einer Kompassnadel, eines Fadenkreuzes, eines Pfeils (20) und/oder in Art eines künstlichen Horizonts dargestellt wird.

9. Verfahren nach einem der vorhergehenden Ansprüche, **dadurch gekennzeichnet, dass** eine Charakteristik der Signalisierung von Orientierungsabweichungen, insbesondere eine Signalintensität, Lautstärke, Frequenz, Farbdarstellung, ein Anzeigewert oder eine Symbolform, korrespondierend zum Wert oder Ausmaß einer Kenngröße für die jeweilige Orientierungsabweichung über wenigstens ein Ausgabemittel (16) variierend ausgegeben wird.

10. Verfahren nach einem der vorhergehenden Ansprüche, **dadurch gekennzeichnet, dass** eine Über- und/oder eine Unterschreitung eines festgelegten Grenzwertes für eine Orientierungsabweichung durch wenigstens ein transientes Signal eines Ausgabemittels (16), insbesondere durch Aufblinken eines optischen Signalisierungsmittels, durch ein kurzes akustisches Signal, oder durch einen taktil wahrnehmbaren, mechanischen Impuls signalisiert wird.

11. Verfahren nach einem der vorhergehenden Ansprüche, **dadurch gekennzeichnet, dass** die Vergleichsorientierung (15) durch zumindest eine vordefiniert festgelegte Koordinatenachse, insbesondere durch die x-, y- oder z-Achse eines Weltkoordinatensystems (19) des Industrieroboters (2) mitbestimmt ist.

12. Verfahren nach einem der vorhergehenden Ansprüche, **dadurch gekennzeichnet, dass** die Vergleichsorientierung (15) durch die Orientierung einer positionsveränderlichen Achse des Industrieroboters (2), ausgewählt aus der Gruppe Gelenks-, Arm-, Werkzeug-, oder Spindelachse, festgelegt ist.

13. Verfahren nach einem der vorhergehenden Ansprüche, **dadurch gekennzeichnet, dass** die Vergleichsorientierung (15) durch die vordefinierte Orientierung einer Kaliblierposition oder einer Kalibriereinrichtung für eine initiale oder eine während des Betriebs periodisch zu nutzende Referenzierung zwischen der Orientierung des Bewegungsvorgabemittels (3) und den Ausgangswerten des Steuerungssystems (1) bezüglich der Orientierung des Bewegungsvorgabemittels (3) festgelegt ist.

14. Verfahren nach einem der vorhergehenden Ansprüche, **dadurch gekennzeichnet, dass** die festgestellten Abweichungen zwischen der vom Steuerungssystem (1) ermittelten Orientierung des Bewegungsvorgabemittels (3) und der Vergleichsorientierung (15) nach aktiver Quittierung durch die Bedienperson für die fortgesetzte Korrektur der vom Steuerungssystem (1) ermittelten Orientierung verwendet werden und somit die Abweichungen egalisiert oder annulliert werden.

15. Verfahren nach Anspruch 14, **dadurch gekennzeichnet, dass** die Abweichungen nur dann egalisiert oder annulliert werden beziehungsweise eine Quittierung durch die Bedienperson nur dann ermöglicht wird, wenn das Ausmaß der Abweichungen einen festgelegten oberen Grenzwert nicht überschreitet.

16. Verfahren nach einem der vorhergehenden Ansprüche, **dadurch gekennzeichnet, dass** bei einer Überschreitung eines festgelegten oberen Grenzwertes für die Abweichung die Abgabe weiterer Verfahr- oder Bewegungskommandos vom Steuerungssystem (1) beziehungsweise Bewegungsvorgabemittel (3) gesperrt wird.

17. Verfahren nach einem der vorhergehenden Ansprüche, **dadurch gekennzeichnet, dass** die vom Steuerungssystem (1) generierten Steuerbefehle für die Bewegungsteuerung oder Ablaufprogrammierung des Industrieroboters (2), welche Steuerbefehle auf rechnerisch ausgewerteten Signalen der internen und/oder externen Sensorik (8; 9) basieren, vom Industrieroboter (2) im wesentlichen unverzögert, insbesondere in Echtzeit, in korrespondierende Bewegungen oder Ablaufveränderungen umgesetzt werden.

18. Steuerungssystem zum Programmieren oder Vorgeben von Bewegungen oder Abläufen eines Industrieroboters (2), wobei mittels einem von einer Bedienperson händisch zu führenden Bewegungsvorgabemittel (3) mit integrierter und/oder externer Sensorik (8; 9), welche zur Ermittlung der Orientierung und gegebenenfalls der Position des händisch zu führenden Bewegungsvorgabemittels (3) im Raum vorgesehen ist, vom Steuerungssystem (1) zumindest ein Teil der Daten für die Bewegungssteuerung oder Ablaufprogrammierung des Industrieroboters (2) errechnet und generiert wird, und wobei die vom Steuerungssystem (1) ermittelte Orientierung des Bewegungsvorgabemittels (3) im Raum mit einer vordefinierten, im Steuerungssystem (1) hinterlegten oder vom Steuerungssystem (1) abrufbaren Vergleichsorientierung (15) verglichen wird, **dadurch gekennzeichnet, dass** der Vergleich
(i) nach dem Verstreichen einer vordefinierten Zeitspanne oder zu variierenden, vom Steuerungssystem (1) abhängigen Zeitpunkten, oder
(ii) beim Erreichen einer vordefinierten, mit dem Bewegungsvorgabemittel (3) zurückgelegten Bewegungstrecke, oder
(iii) nach der Ausführung eines die Fehlerwahrscheinlichkeit steigernden oder die Erfassungsgenauigkeit beeinträchtigenden Bewegungsmusters, oder
(iv) auf sporadischen Wunsch und nach entsprechender Befehlseingabe durch die Bedienperson
durchgeführt wird, und dass der Bedienperson das Ausmaß einer Abweichung zwischen der ermittelten Orientierung des Bewegungsvorgabemittels (3) und der Vergleichsorientierung (15) und/oder eine Überschreitung und/oder eine Einhaltung eines vorbestimmten Ausmaßes einer Abweichung zwischen der ermittelten Orientierung des Bewegungsvorgabemittels (3) und der Vergleichsorientierung (15) signalisiert wird.

19. Steuerungssystem nach Anspruch 18, **dadurch gekennzeichnet, dass** es zur Durchführung des Verfahrens nach einem oder mehreren der Ansprüche 1 bis 17 ausgebildet ist.

20. Bewegungsvorgabemittel und Steuerungssystem zum Programmieren oder Vorgeben von Bewegungen oder Abläufen eines Industrieroboters (2), wobei über das von einer Bedienperson händisch zu führende Bewegungsvorgabemittel (3) mit integrierter und/oder externer Sensorik (8; 9), welche zur Ermittlung der Orientierung und gegebenenfalls der Position des händisch zu führenden Bewegungsvorgabemittels (3) im Raum vorgesehen ist, von dem Steuerungssystem
(1) zumindest ein Teil der Daten für die Bewegungssteuerung oder Ablaufprogrammierung des Industrieroboters (2) errechnet und generiert wird, und wobei die vom Steuerungssystem (1) ermittelte Orientierung des Bewegungsvorgabemittels (3) im Raum mit einer vordefinierten, im Steuerungssystem (1) hinterlegten oder vom Steuerungssystem (1) abrufbaren Vergleichsorientierung (15) verglichen wird, **dadurch gekennzeichnet, dass** der Vergleich
(i) nach dem Verstreichen einer vordefinierten Zeitspanne oder zu variierenden, vom Steuerungssystem (1) abhängigen Zeitpunkten, oder
(ii) beim Erreichen einer vordefinierten, mit dem Bewegungsvorgabemittel (3) zurückgelegten Bewegungstrecke, oder
(iii) nach der Ausführung eines die Fehlerwahrscheinlichkeit steigernden oder die Erfassungsgenauigkeit beeinträchtigenden Bewegungsmusters, oder
(iv) auf sporadischen Wunsch und nach entsprechender Befehlseingabe durch die Bedienperson
durchgeführt wird, und dass der Bedienperson das Ausmaß einer Abweichung zwischen der ermittelten Orientierung des Bewegungsvorgabemittels (3) und der Vergleichsorientierung (15) und/oder eine Überschreitung und/oder eine Einhaltung eines vorbestimmten Ausmaßes einer Abweichung zwischen der ermittelten Orientierung des Bewegungsvorgabemittels (3) und der Vergleichsorientierung (15) signalisiert wird.

21. Bewegungsvorgabemittel und Steuerungssystem nach Anspruch 20, **dadurch gekennzeichnet, dass** es zur Durchführung des Verfahrens nach einem oder mehreren der Ansprüche 1 bis 17 ausgebildet ist.

22. Bewegungsvorgabemittel und Steuerungssystem nach Anspruch 20 oder 21, **dadurch gekennzeichnet, dass** es wenigstens eine bevorzugt drahtlose Datenschnittstelle (10) zur datentechnischen Kommunikation mit einer Auswertungseinheit im Steuerungssystem (1) aufweist und diese Datenschnittstelle (10) zum Senden und/oder Empfangen von Informationen oder Daten in Bezug auf ein Ausmaß einer eventuell aufgetretenen Abweichung zwischen der ermittelten Orientierung des Bewegungsvorgabemittels (3) und der vordefinierten Vergleichsorientierung (15) ausgebildet ist.

23. Bewegungsvorgabemittel und Steuerungssystem nach einem der Ansprüche 20 bis 22, **dadurch gekennzeichnet, dass** an dessen Gehäuse oder auf einem grafischen Display (17) des Bewegungsvorgabemittels (3) wenigstens eine Referenzmarkierung oder Richtungsmarkierung vorgesehen ist, auf welche sich die vom Steuerungssystem (1) ermittelte Orientierungsinformation bezieht.

## Claims

1. A method for programming or prescribing movements or sequences of an industrial robot (2), wherein a movement prescribing means (3), which is to be manually guided and has an integrated and/or external sensor array (8; 9) for determining the orientation and potentially the position of the movement prescribing means (3) to be manually guided in space, is used by a control system (1) to calculate and generate at least a portion of the data for controlling the movement or programming the sequence of the industrial robot (2), and wherein the orientation of the movement prescribing means (3) in space determined by the control system (1) is compared with a predefined comparative orientation (15) that is stored in the control system (1) or can be retrieved by the control system (1), **characterized in that** the comparison is performed
(i) after a predefined time has elapsed or at varying times depending on the control system (1), or
(ii) upon reaching a predefined travel distance has been covered by the movement prescribing means (3), or
(iii) after a movement pattern that raises the error probability or impairs detection accuracy has been performed, or
(iv) at the sporadic request and after a corresponding command input of the operator,
and that the operator has signaled to him or her the extent of a deviation between the determined orientation of the movement prescribing means (3) and comparative orientation (15) and/or an exceeding and/or observance of a predetermined extent of a deviation between the determined orientation of the movement prescribing means (3) and comparative orientation (15).

2. The method according to claim 1, **characterized in that** the orientation and potentially the continuous change in position of the movement prescribing means (3) in space is determined from the sensor signals of an inertial sensor array situated in the movement prescribing means (3).

3. The method according to claim 1 or 2, **characterized in that**, in response to a sporadic request or need and/or an automated invitation or prompting by the control system (1), the operator manually aligns the movement prescribing means (3) based on the predefined comparative orientation (15), after which a check is performed to ascertain whether there is a potentially present deviation of the orientation determined by the control system (1) relative to the comparative orientation (15).

4. The method according to one of the preceding claims, **characterized in that** the operator has signaled to him or her the extent and/or direction of the deviation in orientation.

5. The method according to one of the preceding claims, **characterized in that** the operator has signaled to him or her whether at least one fixed limit for the deviation in orientation has been exceeded and/or dropped below.

6. The method according to one of the preceding claims, **characterized in that** potentially arisen deviations in orientation are only signaled as needed, in particular following an activation or request by an operator, wherein signaling potentially takes place in relation to at least one body axis of the movement prescribing means (3).

7. The method according to one of the preceding claims, **characterized in that** a deviation and/or sufficient conformance is signaled using at least one output means (16) formed on the movement prescribing means (3), selected from the group comprised of a graphic display (17), LED, acoustic output element, and vibration generator.

8. The method according to one of the preceding claims, **characterized in that** a determined deviation is indicated by a signal visually discernible by the operator, in particular by a signal light, or by a variable graphic symbol, in particular in the form of a compass needle, a crosshairs, an arrow (20) and/or in the form of an artificial horizon.

9. The method according to one of the preceding claims, **characterized in that** at least one output means (16) is used to varyingly output a characteristic of signaling deviations in orientation, in particular a signal intensity, volume, frequency, color display, a display value or symbol shape, corresponding to the value or extent of a variable for the respective deviation in orientation.

10. The method according to one of the preceding claims, **characterized in that** whether a fixed limit for a deviation in orientation has been exceeded and/or dropped below is signaled by at least one transient signal of an output means (16), in particular by the flashing of an optical signal means, a short acoustic signal, or a tactilely discernible, mechanical impulse.

11. The method according to one of the preceding claims, **characterized in that** the comparative orientation (15) is co-determined by at least one predefined, fixed coordinate axis, in particular by the x, y or z-axis of a world coordinate system (19) of the industrial robot (2).

12. The method according to one of the preceding claims, **characterized in that** the comparative orientation (15) is fixed by the orientation of a position-variable axis of the industrial robot (2), selected from the group comprised of hinge, arm, tool or spindle axis.

13. The method according to one of the preceding claims, **characterized in that** the comparative orientation (15) is fixed by the predefined orientation of a calibration position or a calibration device for an initial referencing or a referencing to be periodically used during operation between the orientation of the movement prescribing means (3) and the initial values of the control system (1) relative to the orientation of the movement prescribing means (3).

14. The method according to one of the preceding claims, **characterized in that** the determined deviations between the orientation of the movement prescribing means (3) ascertained by the control system (1) and the comparative orientation (15) are used after actively acknowledged by the operator for the continued correction of the orientation ascertained by the control system (1), as a result of which the deviations are equalized or nullified.

15. The method according to claim 14, **characterized in that** the deviations are only equalized or nullified or an acknowledgement by the operator is only made possible if the extent of the deviations does not exceed a fixed upper limit.

16. The method according to one of the preceding claims, **characterized in that**, if a fixed upper limit for the deviation is exceeded, the output of additional traversing or movement commands from the control system (1) or movement prescribing means (3) is blocked.

17. The method according to one of the preceding claims, **characterized in that** the control commands generated by the control system (1) for the movement control or sequence programming of the industrial robot (2), wherein these control commands are based on computer evaluated signals of the internal and/or external sensor arrays (8; 9), are converted by the industrial robot (2) into corresponding movements or sequential changes essentially instantaneously, in particular in real time.

18. A control system for programming or prescribing movements or sequences of an industrial robot (2), wherein a movement prescribing means (3), which is to be manually guided by the operator and has an integrated and/or external sensor array (8; 9) for determining the orientation and potentially the position of the movement prescribing means (3) to be manually guided in space, is used by a control system (1) to calculate and generate at least a portion of the data for the movement control or sequence programming of the industrial robot (2), and wherein the orientation of the movement prescribing means (3) in space determined by the control system (1) is compared with a predefined comparative orientation (15) that is stored in the control system (1) or can be retrieved by the control system (1), **characterized in that** the comparison is performed
(i) after a predefined time has elapsed or at varying times depending on the control system (1), or
(ii) upon reaching a predefined travel distance that has been covered by the movement prescribing means (3), or
(iii) after a movement pattern that raises the error probability or impairs detection accuracy has been performed, or
(iv) at the sporadic request and after a corresponding command input of the operator,
and that the operator has signaled to him or her the extent of a deviation between the determined orientation of the movement prescribing means (3) and comparative orientation (15) and/or an exceeding and/or observance of a predetermined extent of a deviation between the determined orientation of the movement prescribing means (3) and comparative orientation (15).

19. A control system according to claim 18, **characterized in that** it is designed for implementing the method according to one or more of claims 1 to 17.

20. A movement prescribing means and control system for programming or prescribing movements or sequences of an industrial robot (2), wherein a movement prescribing means (3), which is to be manually guided by the operator and has an integrated and/or external sensor array (8; 9) for determining the orientation and potentially the position of the movement prescribing means (3) to be manually guided in space, is used by a control system (1) to calculate and generate at least a portion of the data for controlling the movement or programming the sequence of the industrial robot (2), and wherein the orientation of the movement prescribing means (3) in space determined by the control system (1) is compared with a predefined comparative orientation (15) that is stored in the control system (1) or can be retrieved by the control system (1), **characterized in that** the comparison is performed
(i) after a predefined time has elapsed or at varying times depending on the control system (1), or
(ii) upon reaching a predefined travel distance that has been covered by the movement prescribing means (3), or
(iii) after a movement pattern that raises the error probability or impairs detection accuracy has been performed, or
(iv) at the sporadic request and after a corresponding command input of the operator,
and that the operator has signaled to him or her the extent of a deviation between the determined orientation of the movement prescribing means (3) and comparative orientation (15) and/or an exceeding and/or observance of a predetermined extent of a deviation between the determined orientation of the movement prescribing means (3) and comparative orientation (15).

21. The movement prescribing means and control system according to claim 20, **characterized in that** it is designed to implement the method according to one or more of claims 1 to 17.

22. The movement prescribing means and control system according to claim 20 or 21, **characterized in that** it exhibits at least one preferably wireless data interface (10) for data communication with an evaluation unit in the control system (1), and this data interface (10) is designed to send and/or receive information or data in relation to an extent of a deviation that potentially arose between the ascertained orientation of the movement prescribing means (3) and the predefined comparative orientation (15).

23. The movement prescribing means and control system according to one of claims 20 to 22, **characterized in that** at least one reference marking or directional marking is provided on its housing or on a graphic display (17) of the movement prescribing means (3), to which the orientation information ascertained by the control system (1) relates.

## Revendications

1. Procédé pour programmer ou spécifier des mouvements ou des opérations d'un robot industriel (2), dans lequel par l'intermédiaire de moyens de spécification de mouvements à guider manuellement (3) pourvus de capteurs intégrés et/ou externes (8 ; 9) permettant la détermination de l'orientation et éventuellement de la position dans l'espace des moyens de spécification de mouvements à guider manuellement (3), un système de commande (1) assure le calcul et la génération d'au moins une partie des données destinées à la commande de mouvements ou à la programmation d'opérations du robot industriel (2), et dans lequel l'orientation dans l'espace des moyens de spécification de mouvements (3) déterminée par le système de commande (1) est comparée à une orientation de comparaison (15) prédéfinie, enregistrée dans le système de commande (1) ou pouvant être extraite par le système de commande (1), **caractérisé en ce que** la comparaison va être mise en oeuvre
(i) après l'écoulement d'un laps de temps prédéfini ou de points de temps à faire varier par le système de commande (1), ou
(ii) en atteignant une étendue de mouvements prédéfinie effectuée à l'aide des moyens de spécification de mouvements (3), ou
(iii) après la mise en oeuvre d'un modèle de mouvements améliorant la probabilité d'erreur ou affectant la précision de détection, ou
(iv) à la demande de manière sporadique et après une instruction d'entrée correspondante de l'utilisateur,
et **en ce que** l'utilisateur va signaler l'ampleur d'un écart entre l'orientation déterminée des moyens de spécification de mouvements (3) et l'orientation de comparaison (15) et/ou un dépassement et/ou une observation d'une ampleur prédéterminée d'un écart entre l'orientation déterminée des moyens de spécification de mouvements (3) et l'orientation de comparaison (15).

2. Procédé selon la revendication 1, **caractérisé en ce que** l'orientation et le cas échéant la variation de position continue des moyens de spécification de mouvements (3) dans l'espace est déterminée à partir des signaux de capteur provenant de capteurs inertiels agencés dans les moyens de spécification de mouvements (3).

3. Procédé selon la revendication 1 ou 2, **caractérisé en ce que** l'utilisateur dispose manuellement les moyens de spécification de mouvements (3) correspondant à l'orientation de comparaison prédéfinie (15) suite à une demande sporadique désirée ou en fonction des besoins et/ou à la suite d'une d'invitation ou demande automatique par le système de commande (1), puis un examen relatif à un écart éventuel de l"orientation déterminée par le système de commande (1) par rapport à l'orientation de comparaison (15) est effectué.

4. Procédé selon l'une quelconque des revendications précédentes, **caractérisé en ce que** l'utilisateur va signaler l'amplitude et/ou la direction de l'écart d'orientation.

5. Procédé selon l'une quelconque des revendications précédentes, **caractérisé en ce que** l'utilisateur va signaler un dépassement et/ou une non-atteinte d'au moins une valeur limite fixée pour l'écart d'orientation.

6. Procédé selon l'une quelconque des revendications précédentes, **caractérisé en ce que** la signalisation d'écarts d'orientation potentiellement rencontrés va être effectuée uniquement en fonction des besoins, notamment après l'activation ou la demande d'un utilisateur, dans lequel la signalisation survient éventuellement par rapport à au moins un axe de corps des moyens de spécification de mouvements (3).

7. Procédé selon l'une quelconque des revendications précédentes, **caractérisé en ce que** la signalisation d'un écart et/ou d'un consensus suffisant survient par l'intermédiaire au moins de moyens de sortie (16) agencés au niveau des moyens de spécification de mouvements (3), choisis dans le groupe constitué par un affichage graphique (17), des diodes électroluminescentes (LED), un élément de sortie acoustique, et un générateur de vibrations.

8. Procédé selon l'une quelconque des revendications précédentes, **caractérisées en ce qu'**un écart déterminé va être représenté par un signal visuellement perceptible par l'utilisateur, en particulier par un signal lumineux ou par un symbole graphique variable, en particulier comme une aiguille de boussole, un réticule, une flèche (20) et/ou à la façon d'un horizon artificiel.

9. Procédé selon l'une quelconque des revendications précédentes, **caractérisé en ce qu'**une caractéristique de la signalisation d'écarts d'orientation, en particulier une intensité de signal, un niveau de volume, une fréquence, une représentation en couleurs, une valeur d'affichage ou une forme de symbole, correspondant à la valeur ou à l'ampleur d'un paramètre pour les écarts d'orientation respectifs, est sortie pouvant être modifiée par au moins des moyens de sortie (16).

10. Procédé selon l'une quelconque des revendications précédentes, **caractérisé en ce qu'**un dépassement et/ou une non-atteinte d'une valeur limite fixée pour un écart d'orientation va être signalé(e) par l'intermédiaire d'au moins un signal transitoire des moyens de sortie (16), notamment par le clignotement de moyens de signalisation optique, à travers un court signal acoustique, ou par une impulsion mécanique perceptible tactilement.

11. Procédé selon l'une quelconque des revendications précédentes, **caractérisé en ce que** l'orientation de comparaison (15) est établie par au moins un axe de coordonnées prédéfini fixé, et en particulier par l'axe des x, des y ou des z d'un système de coordonnées d'atelier (19) du robot industriel (2).

12. Procédé selon l'une quelconque des revendications précédentes, **caractérisé en ce que** l'orientation de comparaison (15) est déterminée par l'orientation d'un axe du robot industriel (2) dont la position peut être modifiée, choisi dans le groupe comprenant un axe d'articulation, un axe de bras, un axe d'outil ou un axe de broche.

13. Procédé selon l'une quelconque des revendications précédentes, **caractérisé en ce que** l'orientation de comparaison (15) est déterminée à travers l'orientation prédéfinie d'une position de calibrage ou d'un dispositif de calibrage pour un référencement initial ou pendant le fonctionnement, à partager de manière périodique entre l'orientation des moyens de spécification de mouvements (3) et les valeurs de sortie du système de commande (1) par rapport à l'orientation des moyens de spécification de mouvements (3).

14. Procédé selon l'une quelconque des revendications précédentes, **caractérisé en ce que** les écarts fixés entre l'orientation déterminée par le système de commande (1) des moyens de spécification de mouvements (3) et l'orientation de comparaison (15) après une confirmation active par l'utilisateur concernant la correction continue de l'orientation déterminée le système de commande (1) vont être utilisés, et vont ainsi égaliser ou annuler les écarts.

15. Procédé selon la revendication 14, **caractérisé en ce que** les écarts seront égalisés ou annulés, ou plutôt une confirmation de l'utilisateur sera rendue possible, lorsque l'ampleur des écarts ne dépassera pas une valeur limite supérieure fixée.

16. Procédé selon l'une quelconque des revendications précédentes, **caractérisé en ce qu'**en cas de dépassement d'une valeur limite supérieure fixée pour l'écart, la délivrance de commandes de procédé ou de mouvements provenant du système de commande (1) ou des moyens de spécification de mouvements (3) va être arrêtée.

17. Procédé selon l'une quelconque des revendications précédentes, **caractérisé en ce que** les instructions de commande générées par le système de commande (1) pour la commande de mouvements ou la programmation d'opérations du robot industriel (2), lesquelles instruction de commande sont basées sur des signaux analysés informatiquement des capteurs internes et/ou externes (8 ; 9), vont être converties par le robot industriel (2) sensiblement instantanément, en particulier en temps réel, en mouvements correspondants ou modifications d'opérations correspondantes.

18. Système de commande pour programmer ou spécifier des mouvements ou des opérations d'un robot industriel (2), dans lequel par l'intermédiaire de moyens de spécification de mouvements (3) à guider manuellement par un utilisateur pourvus de capteurs intégrés et/ou externes (8 ; 9), permettant la détermination de l'orientation et éventuellement de la position dans l'espace desdits moyens de spécification de mouvements à guider manuellement (3), un système de commande (1) assure le calcul et la génération d'au moins une partie des données destinées à la commande de mouvements ou à la programmation d'opérations du robot industriel (2), et dans lequel l'orientation dans l'espace des moyens de spécification de mouvements (3) déterminée par le système de commande (1) est comparée à une orientation de comparaison (15) prédéfinie, enregistrée dans le système de commande (1) ou pouvant être extraite par le système de commande (1), **caractérisé en ce que** la comparaison va être mise en oeuvre
(i) après l'écoulement d'un laps de temps prédéfini ou de points de temps à faire varier par le système de commande (1), ou
(ii) en atteignant une étendue de mouvements prédéfinie effectuée à l'aide des moyens de spécification de mouvements (3), ou
(iii) après la mise en oeuvre d'un modèle de mouvements améliorant la probabilité d'erreur ou affectant la précision de détection, ou
(iv) à la demande de manière sporadique et après une instruction d'entrée correspondante de l'utilisateur,
et **en ce que** l'utilisateur va signaler l'ampleur d'un écart entre l'orientation déterminée des moyens de spécification de mouvements (3) et l'orientation de comparaison (15) et/ou un dépassement et/ou une observation d'une ampleur prédéfinie d'un écart entre l'orientation déterminée des moyens de spécification de mouvements (3) et l'orientation de comparaison (15).

19. Système de commande selon la revendication 18, **caractérisé en ce qu'**il est conçu pour la mise en oeuvre du procédé selon une ou plusieurs des revendications 1 à 17.

20. Moyens de prédéfinition de mouvements et système de commande pour programmer ou spécifier des mouvements ou des opérations d'un robot industriel (2), où par l'intermédiaire de moyens de spécification de mouvements (3) à guider manuellement par un utilisateur pourvus de capteurs intégrés et/ou externes (8 ; 9) permettant la détermination de l'orientation et éventuellement de la position dans l'espace desdits moyens de spécification de mouvements à guider manuellement (3), un système de commande (1) assure le calcul et la génération d'au moins une partie des données destinées à la commande de mouvements ou à la programmation d'opérations du robot industriel (2), et dans lequel l'orientation dans l'espace des moyens de spécification de mouvements (3) déterminée par le système de commande (1) est comparée à une orientation de comparaison (15) prédéfinie, enregistrée dans le système de commande (1) ou pouvant être extraite par le système de commande (1), **caractérisé en ce que** la comparaison va être mise en oeuvre
(i) après l'écoulement d'un laps de temps prédéfini ou de points de temps à faire varier par le système de commande (1), ou
(ii) en atteignant une étendue de mouvements prédéfinie effectuée à l'aide des moyens de spécification de mouvements (3), ou
(iii) après la mise en oeuvre d'un modèle de mouvements améliorant la probabilité d'erreur ou affectant la précision de détection, ou
(iv) à la demande de manière sporadique et après une instruction d'entrée correspondante de l'utilisateur,
et **en ce que** l'utilisateur va signaler l'ampleur d'un écart entre l'orientation déterminée des moyens de spécification de mouvements (3) et l'orientation de comparaison (15) et/ou un dépassement et/ou une observation d'une ampleur prédéfinie d'un écart entre l'orientation déterminée des moyens de spécification de mouvements (3) et l'orientation de comparaison (15).

21. Moyens de prédéfinition de mouvements et système de commande selon la revendication 20, **caractérisés par** une conception pour la mise en oeuvre du procédé selon une ou plusieurs des revendications 1 à 17.

22. Moyens de prédéfinition de mouvements et système de commande selon la revendication 20 ou 21, **caractérisés en ce qu'**ils présentent au moins une interface de données de préférence sans fil (10) pour la communication de données techniques avec une unité d'évaluation dans le système de commande (1), et cette interface de données (10) pour émettre et/ou recevoir des informations ou des données est formée par rapport à une ampleur d'un éventuel écart rencontré entre l'orientation déterminée des moyens de spécification de mouvements (3) et l'orientation de comparaison prédéfinie (15).

23. Moyens de prédéfinition de mouvements et système de commande selon l'une quelconque des revendications 20 à 22, **caractérisés en ce que** sur le boîtier ou sur un affichage graphique (17) des moyens de spécification de mouvements (3), au moins une marque de référence ou une marque de direction est prévue, à laquelle les informations d'orientation déterminées par le système de commande (1) font référence.
